# EUROPÄISCHE PATENTSCHRIFT

(11) **EP 2 132 244 B1**
(45) Veröffentlichungstag und Bekanntmachung des Hinweises auf die Patenterteilung: **22.08.2018**
(21) Anmeldenummer: 08735508.7
(22) Anmeldetag: 27.03.2008
(51) Int. Cl.: C08G 18/02, C08G 18/09, C08G 18/28, C08G 18/79

(54) **VERFAHREN ZUR HERSTELLUNG VON FARBLOSEN ISOCYANURATEN VON DIISOCYANATEN**
METHOD FOR PRODUCING COLORLESS ISOCYANURATES OF DIISOCYANATES
PROCÉDÉ DE PRODUCTION D'ISOCYANURATES INCOLORES DE DIISOCYANATES

(30) Priorität: 27.03.2007 EP 07104962; 27.03.2007 EP 07104982; 27.03.2007 EP 07104971
(43) Veröffentlichungstag der Anmeldung: 16.12.2009
(73) Patentinhaber: BASF SE, 67056 Ludwigshafen am Rhein (DE)
(72) Erfinder: SCHÄFER, Harald, 68219 Mannheim (DE); BINDER, Horst, 68623 Lampertheim (DE); KRONER, Matthias, 67304 Eisenberg (DE); BAYER, Alexander, 67117 Limburgerhof (DE); JOKISCH, Carl, 68259 Mannheim (DE)
(74) Vertreter: BASF IP Association
(86) Internationale Anmeldenummer: PCT/EP2008/053619
(87) Internationale Veröffentlichungsnummer: WO 2008/116897

(56) Entgegenhaltungen:
- US-A- 4 537 961
- DATABASE WPI Week 199022 Thomson Scientific, London, GB; AN 1990-168387 XP002484428 & JP 02 110123 A (ASAHI CHEM IND CO LTD) 23. April 1990 (1990-04-23) in der Anmeldung erwähnt

## Beschreibung

Die vorliegende Erfindung betrifft ein neues Verfahren zur Herstellung von farblosen, Isocyanuratgruppen aufweisenden Polyisocyanaten von (cyclo)aliphatischen Diisocyanaten.

EP 330966 A2 beschreibt ein Verfahren zur Herstellung von Isocyanuratgruppen aufweisenden Polyisocyanaten von 1,6-Hexamethylendiisocyanat aus monomerem 1,6-Hexamethylendiisocyanat in Gegenwart von lediglich geringen Mengen von Kohlenstoffdioxid (CO₂) (weniger als 20 ppm) unter Katalyse von quaternären Ammoniumhydroxid-Katalysatoren.

Die dort beschriebenen Katalysatoren können Alkohole als Lösungsmittel enthalten und führen so zu einem gewissen Anteil Urethangruppen im Produkt. Daher ist gemäß S. 4, Z. 34 ff die Verwendung von Lösungsmitteln mit gegenüber Isocyanat reaktiven Gruppen weniger bevorzugt.

Das Entfernen von CO₂ stellt einen technisch aufwendigen Schritt dar, den es zu vermeiden gilt.

DD 202015 beschreibt die Trimerisierung von 1,6-Hexamethylendiisocyanat in Gegenwart von Katalysatoren mit einer Aminosilylgruppe. Zur Desaktivierung des Katalysators wird die Zugabe einer sauren Verbindung empfohlen.

DD 209466 beschreibt die Trimerisierung von 1,6-Hexamethylendiisocyanat in Gegenwart von Katalysatoren mit einer Aminosilylgruppe. Die Desaktivierung des Katalysators erfolgt mit Hilfe von hydroxygruppentragenden Verbindungen, beispielsweise Alkoholen, Phenolen oder Bisurethanen. Derartige Verbindungen dürfen daher also nicht im Reaktionsgemisch vorliegen, da sie sonst die Reaktion vorzeitig abbrechen würden.

Nachteilig an derartigen Aminosilylgruppen-enthaltenden Katalysatoren ist jedoch, daß die Katalysatoren relativ uneffizient sind und in großen Mengen eingesetzt werden müssen. Der Katalysator verbleibt nach Desaktivierung entweder im Produkt oder muß aufwendig entfernt werden.

DE 3810908 C2 beschreibt die Trimerisierung von 1,6-Hexamethylendiisocyanat in Gegenwart von Ammoniumhydroxiden oder-carboxylaten oder Metallsalzen von Alkylcarbonsäuren nachdem das 1,6-Hexamethylendiisocyanat vor der Cyclotrimerisierung optional mit 0,5 bis 5 Gew% eines Alkohols über einen Zeitraum von 10 Minuten bis 3 Stunden bei einer Temperatur von 40 bis 120 °C umgesetzt worden ist, wobei der Alkohol auch als Cokatalysator fungieren kann. Die Reaktion wird durch Erwärmen gestoppt oder durch Zugabe eine Katalysator-Inaktivierungsmittels. Zur Desaktivierung mittels eines Katalysator-Inaktivierungsmittels wird in DE 3810908 C2 lediglich Phosphorsäure oder Schwefelsäure offenbart, was in den explizit offenbarten Beispielen zur Ausscheidung von Kristallen führt und zu gelbstichigen Produkten führt, was den heutigen Anforderungen an Lackpolyisocyanate nicht mehr genügt.

JP 2-110123 A offenbart die Verwendung von Verbindungen mit Sulfinamid- oder Carbonsäureamidgruppen als Katalysatorgift zur Stoppung der Cyclotrimerisierungsreaktion von aliphatischen oder alicyclischen Isocyanaten. Als Beispiele für Carbonsäureamidgruppierungen sind auch Carbamat- und Harnstoffgruppierungen angeführt.

Explizit erwähnt sind Harnstoff und Harnstoffderivate, wie Methylharnstoff und Dimethylharnstoff, Thioharnstoff und Thioharnstoffderivate, wie Methylthioharnstoff und Dimethylthioharnstoff, und Carbamate, wie Phenyl carbamat, Ethyl carbamat and Butyl carbamat. WO 2008/068198 A offenbart eine neuartige Stoppung der Trimerisierungsreaktion. Beispiel 5 beschreibt eine Präurethanisierung mit Ethanol und ergibt ein Produkt mit einer Farbzahl von 34 Hz, was ebenfalls noch zu verbessern angestrebt wird.

Aufgabe der vorliegenden Erfindung war es, ein Verfahren zur Verfügung zu stellen, mit dem isocyanuratgruppenhaltige Polyisocyanatgemische mit geringerer Farbzahl und/oder höherer Farbstabilität während der Lagerung, gegebenenfalls in Gegenwart von Härtungskatalysatoren, hergestellt werden können.

Die Aufgabe wurde gelöst durch eine Verfahren zur Herstellung von isocyanuratgruppenhaltige Polyisocyanatgemische von (cyclo)aliphatischen Diisocyanaten, umfassend die Reaktionsschritte
a) Umsetzen von monomerem (cyclo)aliphatischem Diisocyanat (D) mit mindestens einem mono- oder difunktionellen 3 bis 10 Kohlenstoffatome aufweisenden Alkohol (A) unter Ausbildung von Urethangruppen in Abwesenheit von diese Reaktion katalysierenden Verbindungen,
b) Umsetzen des aus a) erhaltenen Reaktionsgemischs in Gegenwart mindestens eines Katalysators (K), der die Umsetzung von Isocyanaten zu Isocyanuratgruppen zu katalysieren vermag,
c) Desaktivieren des Katalysators (K) aus Schritt b) durch Zugabe eines Katalysatorgiftes (S),
d) Abtrennen des unumgesetzten (cyclo)aliphatischen Diisocyanats (D) aus dem so erhaltenen Reaktionsgemisch aus c), sowie
wobei es ich bei dem Katalysatorgift (S) um eine Verbindung der Formel 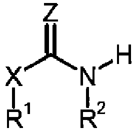 handelt,
worin
R¹ und R² unabhängig voneinander Wasserstoff oder C₁ - C₂₀-Alkyl, C₆ - C₁₂-Aryl oder C₅ - C₁₂-Cycloalkyl, die gegebenenfalls durch Aryl, Alkyl, Aryloxy, Alkyloxy, Heteroatome und/oder Heterocyclen substituiert sein können,
wobei für X=O oder S gilt, daß R¹ * H ist, und
wobei R¹ und R² auch gemeinsam mit der Gruppe X-(CO)-NH einen 5 bis 12-gliedrigen Ring bilden können, wobei R¹ und R² gemeinsam einen gegebenenfalls substituierten zweiwertigen C₂ bis C₉-Alkylenrest bilden, der auch Bestandteil eines Arylen- oder Cycloalkylenrestes sein kann,
Z Sauerstoff (O) oder Schwefel (S), bevorzugt Sauerstoff
X Sauerstoff (O), Schwefel (S), Imino (NH) oder substituiertes Imino (NR³) und R³ C₁ bis C₄-Alkyl
bedeuten,
wobei der Rest R¹ der Verbindungen (S) mindestens eine, bevorzugt genau eine gegenüber Isocyanat reaktive Gruppe aufweist.

Die gemäß dem erfindungsgemäßen Verfahren erhaltenen isocyanuratgruppenhaltigen Polyisocyanatgemische zeigen eine geringere Farbzahl und/oder höhere Farbstabilität. Des weiteren stellt es einen Vorteil dar, daß die erhaltenen Polyisocyanatgemische bei Lagerung in Gegenwart von Katalysatoren für die Herstellung von 2K-Polyurethanlacken, in der Regel Lewis-Säuren, sowie gegebenenfalls weiterer Lackbestandteile nur eine relativ geringe Farbzahlsteigerung zeigen.

Bei dem Diisocyanat (D) im erfindungsgemäßen Verfahren handelt es sich um (cyclo)aliphatische Diisocyanate, was in dieser Schrift kurz für cycloaliphatische oder aliphatische Diisocyanate steht.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es könnte sich aber prinzipiell auch um Monoisocyanate mit einer Isocyanatgruppe handeln, diese sind aber weniger bevorzugt.

Es kommen prinzipiell auch höhere Isocyanate mit im Mittel mehr als 2 Isocyanatgruppen in Betracht, diese sind aber weniger bevorzugt. Dafür eignen sich beispielsweise Triisocyanate wie Triisocyanatononan oder 2'-Isocyanatoethyl-(2,6-diisocyanatohexanoat), oder die Gemische aus Di-, Tri- und höheren Polyisocyanaten.

Die monomeren Isocyanate weisen im wesentlichen keine Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, (z.B. Methyl- oder Ethyl-2,6-diisocyanatohexanoat), Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische.

Besonders bevorzugt sind 1,6-Hexamethylendiisocyanat, 1,3-Bis(isocyanatomethyl)cyclo-hexan und Isophorondiisocyanat, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Der Gehalt an isomeren Verbindungen im Diisocyanat (D) spielt erfindungsgemäß keine entscheidende Rolle. So kann 1,6-Hexamethylendiisocyanat beispielsweise einen geringen Anteil an 2- und/oder 3-Methyl-1,5-pentamethylendiisocyanat enthalten.

Für die vorliegende Erfindung kann sowohl solches Diisocyanat (D) eingesetzt werden, das durch Phosgenierung der korrespondierenden Amine erhalten wird, als auch solches, das ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, wie 1,6-Hexamethylendiisocyanat (HDI), hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was zu günstigen Farbzahlen der Produkte führen kann.

In einer Ausführungsform der vorliegenden Erfindung weist das Diisocyanat (D) einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch Diisocyanate (D) mit einem höheren Chlorgehalt eingesetzt werden, beispielsweise bis zu 500 ppm.

Selbstverständlich können auch Gemische aus Diisocyanat (D), das durch Umsetzung des korrespondierenden Diamins mit beispielsweise Harnstoff und Alkoholen und Spaltung der erhaltenen Biscarbaminsäureester erhalten worden ist, mit solchem Diisocyanat, das durch Phosgenierung des korrespondierenden Amins erhalten worden sind, eingesetzt werden.

Als mono- oder difunktionelle 3 bis 10 Kohlenstoffatome aufweisende Alkohole (A) kommen bevorzugt Alkanole und Alkandiole in Betracht, besonders bevorzugt sind Alkanole.

Bevorzugt weisen die Verbindungen (A) 3 bis 9 Kohlenstoffatome, besonders bevorzugt 4 bis 9 und ganz besonders bevorzugt 6 bis 8 Kohlenstoffatome auf.

Es stellt einen Vorteil von Alkoholen mit mehr als 3 Kohlenstoffatomen dar, daß diese sowie die korrespondierenden Urethane mit den Diisocyanaten (D) einen höheren Siedepunkt aufweisen als niedrige Alkohole und somit im erfindungsgemäßen Verfahren kaum flüchtig sind, so daß derartige flüchtige Urethane mit dem Diisocyanat in das Destillat (siehe unten) übergehen könnten.

Beispiele für Alkanole dafür sind *iso*-Propanol, n-Propanol, n-Butanol, *iso*-Butanol, *sek-*Butanol, *tert*-Butanol, n-Hexanol, n-Heptanol, n-Octanol, 2-Ethylhexanol, n-Decanol. Bevorzugt sind n-Butanol, iso-Butanol, n-Hexanol, n-Octanol und 2-Ethylhexanol, besonders bevorzugt sind n-Butanol, n-Octanol und 2-Ethylhexanol, ganz besonders bevorzugt sind n-Butanol und 2-Ethylhexanol, insbesondere bevorzugt ist 2-Ethylhexanol.

Beispiele für monofunktionelle Alkohole, die keine Alkanole sind, sind 2-Methoxyethanol, 2-Ethoxyethanol, 2-Butoxyethanol, Diethylenglykol mono methyl-, -ethyl- oder n-butylether und 1,3-Propandiolmonomethylether.

Beispiele für Alkandiole sind 1,2-Propandiol, Ethylenglykol, 2,2-Dimethyl-1,2-Ethandiol, 1,3-Propandiol, 1,2-Butandiol, 1,2-Butandiol, 1,4-Butandiol, 1,5-Pentandiol, 1,6-Hexandiol, 2-Methyl-1,3-pentandiol, 2-Ethyl-1,3-hexandiol, 2-Propyl-1,3-heptandiol, 2,2,4-Trimethyl-1,3-pentandiol, 1,8-Octandiol und 1,10-Decandiol.

Bezogen auf die Menge des Polyisocyanatgemischs (Endprodukt) werden 0,25 - 25 Gew%, bevorzugt 0,5 bis 8, besonders bevorzugt 0,75 bis 5 und ganz besonders bevorzugt 1 - 2 Gew% des Alkohols (A) über einen Zeitraum von 5 Minuten bis 4 Stunden, bevorzugt 10 Minuten bis 3 Stunden, besonders bevorzugt 15 Minuten bis 2 Stunden und ganz besonders bevorzugt 30 Minuten bis 90 Minuten bei einer Temperatur von 40 bis 160 °C, bevorzugt 60 bis 120, besonders bevorzugt 80 bis 100 °C umgesetzt.

In einer bevorzugten Ausführungsform werden mehrere Alkohole, beispielsweise mindestens zwei, besonders bevorzugt genau zwei Alkohole in Mengen von jeweils weniger als 2 Gew%, bevorzugt nicht mehr als 1,75 Gew% und besonders bevorzugt nicht mehr als 1,5 Gew% eingesetzt.

In einer weiteren bevorzugten Ausführungsform wird 2-Ethylhexanol in Mengen bis zu 25 Gew% bezogen auf das Polyisocyanatgemisch eingesetzt, besonders bevorzugt von 2 bis 5 Gew% 2-Ethylhexanol.

In einer weiteren bevorzugten Ausführungsform wird 2-Ethyl-1,3-hexandiol oder 2,2,4-Trimethyl-1,3-pentandiol in Mengen bis zu 25 Gew% bezogen auf das Polyisocyanatgemisch eingesetzt, besonders bevorzugt von 0,5 bis 14 Gew%, ganz besonders bevorzugt von 3 bis 8 Gew%.

Bevorzugt werden mindestens 10% des Alkohols (A) zu Urethangruppen umgesetzt, besonders bevorzugt mindestens 20%.

In einer weiteren Variante werden mindestens 50% des Alkohols (A) zu Urethangruppen umgesetzt.

Dabei bilden sich aus dem Diisocyanat (D) und dem Alkohol (A) bevorzugt überwiegend Monourethane und nur zu einem geringeren Teil Diurethane. Das Bildung von Mono- und Diurethanen erfolgt in der Regel statistisch je nach gewählter Stöchiometrie von Alkohol (A) zu Diisocyanat (D) Besonders bevorzugt liegt das Verhältnis von Mono- zu Diurethanen bei mindestens 60:40 (w/w), ganz besonders bevorzugt mindestens 70:30 und insbesondere mindestens 80:20.

In einer bevorzugten Ausführungsform kann zunächst lediglich ein Teil des Diisocyanats mit Alkohol (A) im Reaktionsschritt a) umgesetzt werden und anschließend vor oder während der Durchführung des Reaktionsschrittes b) ein weiterer Teil Diisocyanat (D) zugesetzt werden. Das Verhältnis zwischen diesen beiden Strömen des Diisocyanats (D) beträgt in dieser Ausführungsform von 10:1 bis 1:20 , bevorzugt von 5:1 bis 1:10 und besonders bevorzugt von 2:1 bis 1:3.

Erfindungsgemäß entscheidend ist, daß im Reaktionsschritt a) im wesentlichen nur eine Reaktion von Diisocyanat (D) mit dem Alkohol (A) unter Bildung von Mono- und/oder Diurethanen stattfindet und keine wesentliche Bildung anderer Polyisocyanate, insbesondere die Bildung isocyanuratgruppenhaltiger Polyisocyanate. Die gebildeten Mono- und/oder Diurethane können in untergeordneter Menge mit weiterem Diisocyanat (D) zu Allophanaten reagieren.

Daher wird der Schritt a) bevorzugt in Abwesenheit eines Katalysators (K) (siehe unten) durchgeführt, der die Umsetzung von Isocyanaten zu Isocyanuratgruppen zu katalysieren vermag.

Weiterhin wird der Schritt a) erfindungsgemäß in Abwesenheit von Stoffen durchgeführt, die die Bildung von Urethanen aus den Verbindungen (A) und (D) zu katalysieren vermögen und die andere als die Verbindungen (A) und (D), sowie die daraus entstehenden Produkte, Neben- und Zwischenprodukte sind.

Die Reaktionstemperatur im Schritt a) liegt bevorzugt bei 40-160 °C, besonders bevorzugt bei 60-120 °C, ganz besonders bevorzugt bei 80-100 °C.

In einer Verfahrensvariante werden die Mengen Alkohol (A) und Diisocyanat (D), die umgesetzt werden sollen schon im Teilschritt a) vollständig zusammengeführt.

In einer anderen Verfahrensvariante erfolgt der Schritt a) der Urethanisierung in einer höheren Konzentration an Alkohol (A) als es der der vollständig eingesetzten Menge Alkohole (A) und Diisocyanat (D) entspricht. Dazu muss nach dem Urethanisierungsschritt a) des Alkohols mit einem Teil der Diisocyanate für den zweiten Teilschritt b) der Isocyanuretisierung noch weiteres Diisocyanat zugeführt werden. Dabei wurde überraschender Weise gefunden, dass die Anwesenheit von Urethanen im Reaktionsgemisch autokatalytisch wirkt, also der relative Umsatz bei höherer Alkoholkonzentration schneller ansteigt als bei niedrigerer Alkoholkonzentration, was für eine geringere Aufenthaltszeit der Urethaniserungsmischung ausgenutzt werden kann.
Da die Bildung von Diurethanen unerwünscht ist, sind Mischungsverhältnisse von Alkohol- zu Isocyanat-Gruppen, die sich dem Äquivalenzverhältnis nähern, weniger bevorzugt.

So reagieren in Schritt a) in der Regel weniger als 20 mol% aller zu Beginn vorliegenden Diisocyanate unter Bildung von Urethangruppen, bevorzugt weniger als 15 mol%, besonders bevorzugt weniger als 10 mol% und ganz besonders bevorzugt weniger als 5 mol%.

Die Schritte a) und b) können in einem kontinuierlichen wie in einem diskontinuierlichen Verfahren durchgeführt werden. Dabei kann z.B. durch die Länge der Kaskade und die Reaktorengrößen im kontinuierlichen Prozess das Verhältnis der Zeiten von Schritt a) und b) eingestellt werden.

Am Ende das Reaktionsschrittes a) liegt ein Reaktionsgemisch vor, das im wesentlichen aus unumgesetztem Diisocyanat (D) und Monourethan sowie in geringen Mengen Diurethan und/oder Allophanat von Diisocyanat (D) mit dem Alkohol (A) besteht. Entsprechend dem eingestellten Umsetzungsgrad kann noch nicht umgesetzter Alkohol (A) enthalten sein.

Der Reaktionsschritt b) umfaßt Umsetzen des aus a) erhaltenen Reaktionsgemischs in Gegenwart mindestens eines Katalysators (K), der die Umsetzung von Isocyanaten zu Isocyanuratgruppen zu katalysieren vermag.

Das aus a) erhaltene Reaktionsgemisch wird anschließend in einen gesonderten Reäktor zur Durchführung des Reaktionsschrittes b) überführt. Alternativ kann der Reaktionsschritt b) auch in demselben Reaktor wie der Reaktionsschritt a) durch Zugabe des Katalysators (K) und Temperieren auf die Reaktionstemperatur der Isocyanuratbildung eingeleitet werden.

Zu den Trimerisierungskatalysatoren, die für das erfindungsgemäße Verfahren geeignet sind, gehören zum Beispiel
- Alkaliphenolate des in GB-PS 1,391,066 oder GB-PS 1,386,399 beschriebenen Typs;
- Aziridinderivate in Kombination mit tertiären Aminen des im US-Patent 3,919,218 beschriebenen Typs;
- quartäre Ammoniumcarboxylate des in den US-Patenten 4,454,317 und 4,801,663 beschriebenen Typs;
- quartäre Ammoniumphenolate mit einer zwitterionischen Struktur des im US-Patent 4,335,219 beschriebenen Typs;
- Ammoniumphosphonate und -phosphate des im US-Patent 4,499,253 beschriebenen Typs;
- Alkalicarboxylate, beispielsweise Kobaltnaphthenat, Natriumbenzoat, Natriumacetat, Kaliumformiat und wie in DE-OS 3,219,608 beschrieben;
- basische Alkalimetallsalze, die mit acyclischen organischen Verbindungen komplexiert sind, wie sie im US-Patent 4,379,905 beschrieben sind, etwa Kaliumacetat, das mit einem Polyethylenglycol komplexiert ist, das im Mittel 5 bis 8 Ethylenoxideinheiten enthält;
- basische Alkalimetallsalze, die mit Kronenethern komplexiert sind, wie sie im US-Patent 4,487,928 beschrieben sind;
- Gemische aus Alkalimetallfluoriden und quartären Ammonium- oder Phosphoniumsalzen, wie sie in EP-A 355479; EP 798299 B1, oder EP 896009 B1 zur Herstellung von Mischungen von Isocyanurat mit asymmetrischen Isocyanuraten, Iminooxodiazindion, beschrieben sind,
- tertiäre Amine, beispielsweise Triethylamin, N,N-Dimethybenzylamin, Triethylendiamin, Tris-2,4,6-(dimethylaminomethyl)-phenol und Tris-1,3,5-(dimethylaminopropyl)-S-hexahydrotriazin,
- N-heterocyclische Carbene (NHCs) wie in WO 2005/113626
- Alkalioxide, Alkalihydroxide und starke organischen Basen, wie z.B. Alkalialkoholate,
- Zinn-, Zink- bzw. Bleisalze von Alkylcarbonsäuren,
- Organische Metallsalze der Formel (A)ₙ-R-O-CO-O^{⊖}M^{⊕} gemäß US-A-3 817 939, in der bedeuten:
   A eine Hydroxylgruppe oder ein Wasserstoffatom,
   n eine Zahl von 1 bis 3,
   R einen polyfunktionellen linearen oder verzweigten, aliphatischen oder aromatischen Kohlenwasserstoffrest und
   M^{⊕} in Kation, z.B. ein Alkalimetallkation oder ein quarternäres Ammoniumkation, wie Tetraalkylammonium, sowie
- quartäre Hydroxyalkylammoniumverbindungen der Formel

   R⁴,R⁵,R⁶N^{⊕}-CH₂-CH(OH)-R^{7 ⊖}O-(CO)-R⁸
als Katalysator gemäß DE-A-26 31 733 (US-A-4 040 992).

Besonders geeignet als Katalysatoren für das Verfahren sind quartäre Ammoniumsalze entsprechend der Formel 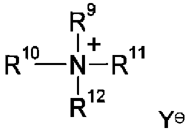 mit
Y^{⊖}= Carboxylat (R¹³COO⁻), Fluorid (F⁻), Carbonat (R¹³O(CO)O⁻) oder Hydroxid (OH⁻),
wie sie für Y⁻ = OH⁻ im US-Patent 4,324,879 und in den Deutschen Offenlegungsschriften 2,806,731 und 2,901,479 beschrieben sind.

Bevorzugt handelt es sich bei dem Rest Y^{⊖} um ein Carboxylat, Carbonat oder Hydroxid, besonders bevorzugt um ein Carboxylat oder Hydroxid und ganz besonders bevorzugt um ein Carboxylat.

R¹³ ist darin Wasserstoff, C₁ bis C₂₀-Alkyl, C₆ bis C₁₂-Aryl oder C₇ bis C₂₀-Arylalkyl, das jeweils optional substituiert sein kann.

Bevorzugt ist R¹³ Wasserstoff oder C₁ bis C₈-Alkyl.

Wird im erfindungsgemäßen Verfahren ein Katalysator mit einem Hydroxidion als Anion eingesetzt, so ist es bevorzugt, die Reaktion bei einem verminderten Gehalt an Kohlenstoffdioxid (CO₂) durchzuführen, beispielsweise von weniger als 20 ppm, bevorzugt von weniger als 10 und besonders bevorzugt von weniger als 5 ppm, wie beschrieben in der EP 330966 A2.

Bevorzugte quartäre Ammoniumsalze sind diejenigen, bei denen die Reste R⁹ bis R¹² gleiche oder unterschiedliche Alkylgruppen mit 1 bis 20, vorzugsweise 1 bis 4, Kohlenstoffatomen darstellen, die gegebenenfalls durch Hydroxyl- oder Phenylgruppen substituiert sind.

Zwei der Reste R⁹ bis R¹² können auch zusammen mit dem Stickstoffatom und gegebenenfalls einem weiteren Stickstoff- oder Sauerstoffatom einen heterocyclischen, fünf-, sechs- oder siebengliedrigen Ring bilden. Die Reste R⁹ bis R¹¹ können in jedem Falle auch Ethylenreste darstellen, die zusammen mit dem quartären Stickstoffatom und einem weiteren tertiären Stickstoffatom eine bicyclische Triethylendiaminstruktur bilden, vorausgesetzt, daß der Rest R¹² dann eine Hydroxyalkylgruppe mit 2 bis 4 Kohlenstoffatomen darstellt, bei der die Hydroxylgruppe vorzugsweise in der 2-Stellung zu dem quartären Stickstoffatom angeordnet ist. Der hydroxysubstituierte Rest oder die hydroxysubstituierten Reste können auch andere Substituenten enthalten, beispielsweise C₁- bis C₄-Alkyloxy-Substituenten.

Dabei können die Ammoniumionen auch Teil eines ein- oder mehrgliedrigen Ringsystems sein, beispielsweise abgeleitet von Piperazin, Morpholin, Piperidin, Pyrrolidin, Chinuclidin oder Di-aza-bicyclo-[2.2.2]-octan.

Beispiele für 1 bis 20 Kohlenstoffatome aufweisende Gruppen R⁹ bis R¹² sind unabhängig voneinander Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, 2-Hydroxyethyl, 2-Hydroxypropyl, 3-Hydroxypropyl, 4-Hydroxybutyl, 6-Hydroxyhexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dodecylphenyl, Methoxyphenyl, Dimethoxyphenyl, Methylnaphthyl, Isopropylnaphthyl, Chlornaphthyl, 2,6-Dimethylphenyl, 2,4,6-Trimethylphenyl, 2,6-Dimethoxyphenyl, 2,6-Dichlorphenyl, Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Chlorcyclohexyl, Dichlorcyclohexyl, Dichlorcyclopentyl, Norbornyl oder Norbornenyl.

Bevorzugt sind unabhängig voneinander die Reste R⁹ bis R¹² C₁ bis C₄-Alkyl. R¹² kann zusätzlich Benzyl sein oder ein Rest der Fomel 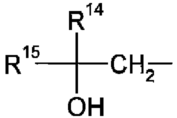 worin R¹⁴ und R¹⁵ unabhängig voneinander Wasserstoff oder C₁ bis C₄-Alkyl sein kann.

Besonders bevorzugte Reste R⁹ bis R¹² sind unabhängig voneinander Methyl, Ethyl und n-Butyl und für R¹² zusätzlich Benzyl, 2-Hydroxyethyl und 2-Hydroxypropyl.

Bevorzugt können für das erfindungsgemäße Verfahren folgende Katalysatoren eingesetzt werden:
Quarternäre Ammoniumhydroxide, vorzugsweise N,N,N-Trimethyl-N-benzylammoniumhydroxid und N,N,N-Trimethyl-N-(2-hydroxypropyl)-ammoniumhydroxid, gemäß DE-A-38 06 276, unter der Voraussetzung, daß das Verfahren dann bevorzugt unter einem verringerten Gehalt an Kohlenstoffdioxid durchgeführt wird.

Hydroxyalkyl substituierte quarternäre Ammoniumhydroxide gemäß EP-A-10 589 (US-A-4 324 879).

In dieser Schrift bedeuten
gegebenenfalls durch Aryl, Alkyl, Aryloxy, Alkyloxy, Heteroatome und/oder Heterocyclen substituiertes C₁ - C₂₀-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hetadecyl, Octadecyl, Eicosyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl,
gegebenenfalls durch Aryl, Alkyl, Aryloxy, Alkyloxy, Heteroatome und/oder Heterocyclen substituiertes C₆ - C₁₂-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso-*Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl,
gegebenenfalls durch Aryl, Alkyl, Aryloxy, Alkyloxy, Heteroatome und/oder Heterocyclen substituiertes C₅ - C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,
zweiwertige C₂ bis C₉-Alkylenreste, die auch Bestandteil eines Arylen- oder Cycloalkylenrestes sein können, sind beispielsweise 1,2-Ethylen, 1,2-Propylen, 1,3-Propylen, 1,6-Hexylen, 2,2,4-Trimethylhexylen, 1,4-Cyclohexylen, Isopropyliden-1,4-dicyclohexylen, 1,2- 1,3- oder 1,4-Phenylen, 4,4'-Biphenylen, 4,4'-Bisphenylmethylen, 1,3-, 1,4- oder 1,5-Naphthylen, 3,3'-Dimethyl-4,4'-diphenylen, 3,3'-Dichlor-4,4'-diphenylen, 2,4- oder 2,6-Pyridyl, 1,4-Anthrachinondiyl, m- oder p-Toluylen, 4,6-Dimethyl-1,3-phenylen, 4,6-Dichloro-1,3-phenylen, 5-Chloro-1,3-phenylen, 5-Hydroxy-1,3-phenylen, 5-Methoxy-1,3-phenylen, 2,3-Dimethyl-1,4-phenylen m- oder p-Xylylen, Methylen-di-p-phenylen, Isopropyliden-di-p-phenylen, Thio-di-p-phenylen, Dithio-di-p-phenylen, Sulfo-di-p-phenylen, Carbonyl-di-p-phenylen, und
C₁ bis C₄-Alkyl beispielsweise Methyl, Ethyl, Propyl, Isopropyl, n-Butyl, sec-Butyl oder tert.-Butyl, bevorzugt Methyl, Ethyl oder n-Butyl, besonders bevorzugt Methyl oder Ethyl und ganz besonders bevorzugt Methyl.

Die Herstellung dieser quartären Ammoniumkatalysatoren erfolgt in bekannter Weise, beispielsweise durch Umsetzen eines tertiären Amins mit einem Alkylenoxid in einem wäßrig-alkoholischen Medium (vgl. US-Patent 3,995,997, Spalte 2, Zeilen 19-44).

Beispiele für geeignete tertiäre Amine sind Trimethylamin, Tributylamin, 2-Dimethylaminoethanol, Triethanolamin, Dodecyldimethylamin, N,N-Dimethylcyclohexylamin, N-Methylpyrrolidin, N-Methylmorpholin und 1,4-Diazabicyclo[ 2.2.2]octan. Beispiele für geeignete Alkylenoxide sind Ethylenoxid, Propylenoxid, 1,2-Butylenoxid, Styroloxid und Methoxy-, Ethoxy- oder Phenoxypropylenoxid.

Die meistbevorzugten Katalysatoren (K) sind N-(2-Hydroxypropyl)-N,N,N-trimethylammonium-2-ethylhexanoat (DABCO TMR®) und N-(2-Hydroxypropyl)-N,N,N-trimethylammonium-2-formiat (DABCO TMR®-2) der Firma Air Products.

Weiterhin bevorzugt sind solche Trimerisierungskatalysatoren wie sie bekannt sind aus der DE 10 2004 012571 A1, dort besonders Absatz [0017] bis [0027], sowie aus der EP-A1 668 271, dort besonders von S. 4, Z. 16 bis S. 6, Z. 47, was hiermit Bestandteil der vorliegenden Offenbarung sei.

Die Katalysatoren (K) werden im allgemeinen in Mengen bis zu 1000 Gew.-ppm, vorzugsweise etwa 5 bis 500 Gew.ppm, besonders bevorzugt 10 bis 100 Gew.ppm, bezogen auf das eingesetzte Isocyanat, verwendet.

Die Katalysatoren können in reiner Form oder in Lösung verwendet werden. Zur besseren Handhabung kann der Katalysator in einem Lösungsmittel gelöst werden. Es eignen sich hierzu beispielsweise Alkohole, insbesondere Diole, Ketone, Ether und Ester. Die in dieser Schrift aufgeführten Lösungsmittel, die gegenüber Isocyanatgruppen inert sind, sind als Lösungsmittel geeignet, je nach dem Typ des Katalysators. Dimethylformamid oder Dimethylsulfoxid können ebenfalls als Lösungsmittel für die Katalysatoren verwendet werden.

Beispielsweise werden die oben erwähnten Katalysatoren DABCO TMR® und DABCO TMR®-2 bevorzugt als ca. 33 bis 75 Gew%ige Lösung in Diethylenglykol, Dipropylenglykol, Ethylenglykol oder Ethylenglycol monomethylether eingesetzt. Es ist auch möglich, die Katalysatoren in verdünnterer oder konzentrierterer Formulierung einzusetzen.

Denkbar ist auch die Verwendung von Alkohol (A), wie er in Schritt a) eingesetzt wird, als Lösungsmittel, bevorzugt 2-Ethylhexanol, 2-Ethyl-1,3-hexandiol oder 2,2,4-Trimethyl-1,3-pentandiol.

Die Umsetzung im Reaktionsschritt b) erfolgt in der Regel über einen Zeitraum von 5 Minuten bis 4 Stunden, bevorzugt 10 Minuten bis 3 Stunden, besonders bevorzugt 15 Minuten bis 2 Stunden und ganz besonders bevorzugt 30 Minuten bis 90 Minuten bei einer Temperatur von 40 bis 140 °C, bevorzugt 50 bis 120, besonders bevorzugt 60 bis 100 °C.

Bei der Durchführung des Reaktionsschrittes b) kann eine weitere Reaktion von unumgesetzten Alkohol (A) aus dem Reaktionsschritt a) oder aus dem Lösungsmittel des Katalysators (K) aus dem Schritt b) mit Diisocyanat (D) zu Urethan sowie, gegebenenfalls eine Weiterreaktion zu einem allophanatgruppenhaltigen Polyisocyanat stattfinden.

Nach Erreichen des gewünschten Trimerisierungsgrads der Reaktionsmischung in b) wird die Trimerisierungsreaktion durch eine Desaktivierung des Trimerisierungskatalysators im Reaktionsschritt c) abgebrochen. Reaktionsschritt c) umfaßt das Desaktivieren des Katalysators (K) aus Schritt b) durch Zugabe eines Katalysatorgiftes (S). Der Umsetzungsgrad kann dabei in Abhängigkeit vom Alkohol (A), Diisocyanat (D) und deren Verhältnis, sowie der angestrebten Zielviskosität des Polyisocyanatgemischs gewählt werden.

Das Produkt enthält neben unumgesetzten monomerem Diisocyanat (D) Verbindungen, die eine oder auch mehrere Isocyanuratstrukturen aufweisen. Verbindungen dieser Art sind in der Literatur beschrieben.

Des weiteren können sich urethan- und/oder allophanatgruppenhaltige Polyisocyanate bilden.

Bei Verwendung spezieller Fluorid-Katalysatoren kann ein Teil der Isocyanuratstrukturen auch in asymmetrischer Form als Iminooxodiazindion vorliegen.

Bevorzugt wird die Reaktion so geführt, daß als Polyisocyanate überwiegend isocyanuratgruppenhaltige Polyisocyanate entstehen. In untergeordneten Mengen können beispielsweise uretdiongruppenhaltige Polyisocyanate entstehen, bevorzugt zu nicht mehr als 10 Gew%, besonders bevorzugt zu nicht mehr als 5 Gew% und ganz besonders bevorzugt zu nicht mehr als 2 Gew%, insbesondere nicht mehr als 1,5 Gew%.

Als Desaktivierungsmittel (S) eignen sich prinzipiell anorganische Säuren, wie z.B. Chlorwasserstoff, phosphorige Säure oder Phosphorsäure, Carbonsäurehalogenide, wie z.B. Acetylchlorid oder Benzoylchlorid, Sulfonsäuren oder-ester, wie z.B. Methansulfonsäure, p-Toluolsulfonsäure, p-Toluolsulfonsäuremethyl- oder -ethylester, m-Chlorperbenzoesäure und vorzugsweise Dialkylphosphate wie z.B. Di-2-ethyl-hexylphosphat und Dibutylphosphat.

Nachteilig an diesen Desaktivierungsmitteln ist es jedoch, daß sie in Kombination mit den verwendeten Katalysatoren oftmals Niederschläge oder Trübungen zeigen, wie es aus der DE 3810908 C2 bekannt ist, was eine aufwendige Nachbehandlung der Produkte erfordert.

Erfindungsgemäß werden Verbindungen (S) der Formel 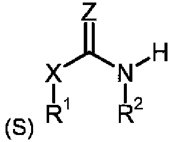 als Desaktivierungsmittel für den Katalysator (K) eingesetzt,
worin
R¹ und R² unabhängig voneinander Wasserstoff oder C₁ - C₂₀-Alkyl, C₆ - C₁₂-Aryl oder C₅ - C₁₂-Cycloalkyl, die gegebenenfalls durch Aryl, Alkyl, Aryloxy, Alkyloxy, Heteroatome und/oder Heterocyclen substituiert sein können,
wobei für X=O oder S gilt, daß R¹ ≠ H ist, und
wobei R¹ und R² auch gemeinsam mit der Gruppe X-(CO)-NH einen 5 bis 12-gliedrigen Ring bilden können, wobei R¹ und R² gemeinsam einen gegebenenfalls substituierten zweiwertigen C₂ bis C₉-Alkylenrest bilden, der auch Bestandteil eines Arylen- oder Cycloalkylenrestes sein kann,
Z Sauerstoff (O) oder Schwefel (S), bevorzugt Sauerstoff
X Sauerstoff (O), Schwefel (S), Imino (NH) oder substituiertes Imino (NR³) und R³ C₁ bis C₄-Alkyl
bedeuten,
wobei der Rest R¹ der Verbindungen (S) mindestens eine gegenüber Isocyanat reaktive Gruppe aufweist.

Für diese Verbindungen (S) gilt folgendes:
X kann bevorzugt O, NH oder NR³ sein, besonders bevorzugt O oder NH und ganz besonders bevorzugt O.

Erfindungsgemäß entscheidend bei den Verbindungen (S) ist, daß bei diesen der Rest R¹ mindestens eine gegenüber Isocyanat reaktive Gruppe aufweist.

Wenn die Reste R¹ und R² miteinander verbunden sind, so handelt es sich bei der Verbindung (S) bevorzugt um cyclische Harnstoffe (X=NH oder NR³) 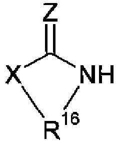 oder um Oxazolidinone (X=O), 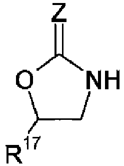 worin
Z Sauerstoff (O) oder Schwefel (S), bevorzugt Sauerstoff
R¹⁶ ein mit mindestens einer gegenüber Isocyanat reaktiven Gruppe substituiertes C₂ bis C₆-Alkylen und
R¹⁷ geradkettiger oder verzweigter C₁- bis C₄-Alkyl, der mit mindestens einer gegenüber Isocyanat reaktiven Gruppe substituiert ist,
bedeuten.

Bevorzugte Oxazolidinone sind solche, in denen R¹⁷ 4-Hydroxyphenylmethyl, 3-Indolylmethyl, Carboxymethyl, 2-Carboxyethyl, Amidocarboxymethyl, 2-Amidocarboxyethyl, Hydroxymethyl, 1-Hydroxyethyl, Thiomethyl, 4-Aminobutyl, 3-Guanidinopropyl oder (1,3-Imidazol-4-yl)methyl ist.

Weiterhin ist es möglich, als Verbindung (S) solche Carbamate einzusetzen, die erhältlich sind durch
1) Umsetzung eines Amins (M) mit einem Carbonat (C) und
2) gegebenenfalls Aufreinigung des aus 1) erhältlichen Reaktionsgemisches.

Amine sind dabei Ammoniak oder primäre Amine, Carbonate sind O,O'-disubstituierte Carbonate mit dem Strukturemelement -O-C(=O)-O-.

Ganz besonders bevorzugte Verbindungen (S) sind solche, die erhältlich sind durch eine Umsetzung gemäß Formel (III), 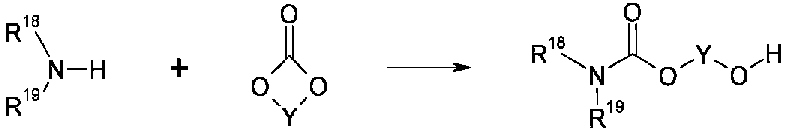 worin
R¹⁸ Wasserstoff,
R¹⁹ Wasserstoff, C₁ - C₂₀-Alkyl, gegebenenfalls durch ein oder mehrere Sauerstoff- und/oder Schwefelatome und/oder ein oder mehrere substituierte oder unsubstituierte Iminogruppen unterbrochenes
C₂ - C₂₀-Alkyl, C₂ - C₁₈-Alkenyl,
C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können,
Y C₂-C₂₀-Alkylen, C₅-C₁₂-Cycloakylen oder durch ein- oder mehrere Sauerstoff- und/oder Schwefelatome und/oder ein oder mehrere substituierte oder unsubstituierte Iminogruppen und/oder durch eine oder mehrere Cycloalkyl-, -(CO)-, -O(CO)O-, -(NH)(CO)O-, -O(CO)(NH)-, -O(CO)- oder -(CO)O-Gruppen unterbrochenes C₂-C₂₀-Alkylen, wobei die genannten Reste jeweils durch Aryl, Alkyl, Aryloxy, Alkyloxy, Heteroatome und/oder Heterocyclen substituiert sein können,
bedeuten.

Bevorzugt ist R¹⁹ Wasserstoff, C₁ - C₁₂-Alkyl oder C₅ - C₆-Cycloalkyl besonders bevorzugt ist R¹⁹ Wasserstoff, C₁ - C₄-Alkyl oder C₅ - C₆-Cycloalkyl und ganz besonders bevorzugt Wasserstoff oder C₁ - C₄-Alkyl.

Y ist bevorzugt C₂-C₁₀-Alkylen, besonders bevorzugt C₂-C₆-Alkylen, ganz besonders bevorzugt C₂-C₄-Alkylen, insbesondere C₂-C₃-Alkylen und speziell C₂-Alkylen, wobei die genannten Reste jeweils durch Aryl, Alkyl, Aryloxy, Alkyloxy, Heteroatome und/oder Heterocyclen substituiert sein können.

Beispiele für R¹⁹ sind Wasserstoff, Methyl, Ethyl, *iso*-Propyl, n-Propyl, n-Butyl, *iso*-Butyl, *sek-*Butyl*, tert-*Butyl*,* n-Hexyl, n-Heptyl, n-Octyl, n-Decyl, n-Dodecyl, n-Tetradecyl, n-Hexadecyl, n-Octadecyl, n-Eicosyl, 2-Ethylhexyl, Cyclopentyl, Cyclohexyl, Cyclooctyl, Cyclododecyl, 2-Hydroxyethyl, 2-Hydroxypropyl und 1-Hydroxypropyl.

Beispiele für Y sind 1,2-Ethylen, 1,2-Propylen, 1,1-Dimethyl-1,2-ethylen, 1-Hydroxy methyl-1,2-ethylen, 2-Hydroxy-1,3-propylen, 1,3-Propylen, 1,4-Butylen, 1,6-Hexylen, 2-Methyl-1,3-Propylen, 2-Ethyl-1,3-Propylen, 2,2-Dimethyl-1,3-Propylen und 2,2-Di methyl-1,4-butylen, bevorzugt sind 1,2-Ethylen, 1,2-Propylen, 1,3-Propylen, besonders bevorzugt sind 1,2-Ethylen und 1,2-Propylen und ganz besonders bevorzugt ist 1,2-Ethylen.

Beispielhafte Amine (M) sind Ammoniak, Methylamin, Ethylamin, *iso*-Propylamin, n-Butylamin, *tert*-Butylamin, Monoethanolamin, Diethanolamin, Propanolamin, Cyclopentylamin, Cyclohexylamin, Anilin, Ethylendiamin, Diethylentriamin, Triethylentetramin und Tetraethylenpentamin.

Beispielhafte Carbonate (C) sind Ethylencarbonat, 1,3-Propylencarbonat, 1,2-Propylencarbonat und Glycerincarbonat (4-Hydroxymethyl)-ethylencarbonat).

Die Umsetzung eines Amins (M) mit einem Carbonat (C) ist an sich bekannt, beispielsweise aus US 4,820,830, Sp. 4, Z. 44 bis Sp. 5, Z. 9, und nicht beschränkt.

Typischerweise werden das Amin (M) und das Carbonat (C) in einer Stöchiometrie von 0,7 bis 1,2 mol Amin : 1 mol Carbonat, bevorzugt 0,8 - 1,2 : 1, besonders bevorzugt 0,9-1,1:1, ganz besonders bevorzugt 0,95 -1,1:1 und insbesondere 1:1 mol/mol miteinander umgesetzt.

Die Umsetzung erfolgt in der Regel bei einer Temperatur von 0 bis 120 °C, besonders bei 20 bis 100, ganz besonders bevorzugt 30 bis 80 und ganz besonders bevorzugt 40 bis 80 °C.

Die Umsetzung ist in der Regel innerhalb von 12 Stunden beendet, bevorzugt innerhalb von 15 Minuten bis 10 Stunden, besonders bevorzugt in 30 Minuten bis 8 Stunden, ganz besonders bevorzugt 45 Minuten bis 6 Stunden und insbesondere innerhalb von 1 bis 4 Stunden.

Die Umsetzung kann ohne Lösungsmittel durchgeführt werden oder in Anwesenheit eines solchen, beispielsweise Alkohole, Ether, Ketone, Kohlenwasserstoffe oder Wasser, bevorzugt ohne Lösungsmittel.

Das aus 1) erhältliche Reaktionsgemisches kann in einem weiteren Schritt 2) falls gewünscht aufgereinigt werden, beispielsweise durch Filtration, Destillation, Rektifikation, Chromatographie, Behandlung mit Ionentauschern, Adsorbentien, neutraler, saurer und/oder alkalischer Wäsche, Strippen oder Kristallisation.

Besonders bevorzugt sind solche Verbindungen (S), bei denen die Reste R¹ und R² nicht miteinander verbunden sind.

Bevorzugt sind R¹ und R² unabhängig voneinander ausgewählt aus der Gruppe bestehend aus Wasserstoff und gegebenenfalls substituiertem C₁ bis C₄-Alkyl, solange mindestens einer dieser Reste mindestens eine gegenüber Isocyanat reaktive Gruppe aufweist.

Dabei gilt für X=O oder S, daß R¹ ≠ H ist.

Solche Reste R¹ oder R², die eine mit NCO reaktive Gruppe tragen, sind beispielsweise Mercapto-, Amino-, monosubstituiertes Amino- oder Hydroxygruppen tragende Reste, besonders bevorzugt eine Hydroxygruppe tragende Reste, ganz besonders bevorzugt solche Reste, die eine Hydroxygruppe in Position 2 tragen. Der 2-Hydroxypropylrest kann die Methylgruppe in Position 1 oder 2 tragen oder eine beliebige Mischung der Isomeren sein.

Insbesondere ist der Rest R¹ausgewählt aus der Gruppe bestehend aus 2-Hydroxyethyl und 2-Hydroxypropyl.

Bevorzugte Individuen (S) sind O-2-Hydroxyethylcarbamat, O-3-Hydroxypropylcarbamat und O-2-Hydroxypropylcarbamat.

Zur leichteren Dosierbarkeit kann es sinnvoll sein, die Verbindung (S) in mindestens einem Lösungsmittel, beispielsweise einem der oben aufgeführten Lösungsmittel oder bevorzugt in einem Alkohol, besonders bevorzugt einem Alkanol zu lösen, beispielsweise als mindestens 5 Gew%ige Lösung, bevorzugt mindestens 10 Gew%ig, besonders bevorzugt mindestens 15 Gew%ig und ganz besonders bevorzugt mindestens 20 Gew%ig.

Die Obergrenze wird dabei lediglich durch die Löslichkeitsgrenze von (S) in dem Lösungsmittel begrenzt.

Zur Stoppung wird die Verbindung (S) in einem molaren Verhältnis zum Katalysator von 0,5 bis 10, bevorzugt 0,6-5, ganz besonders bevorzugt 0,8-3 eingesetzt.

Die Zugabe des Desaktivierungsmittels erfolgt in der Regel bei der Reaktionstemperatur.

Im Reaktionsschritt d) erfolgt das Abtrennen des unumgesetzten Diisocyanats (D) aus dem so erhaltenen Reaktionsgemisch aus c).

Das so hergestellte Polyisocyanate enthaltende Reaktionsgemisch aus Schritt c) wird abschließend in einem Schritt d) in an sich bekannter Weise, beispielsweise durch Dünnschichtdestillation, bei einer Temperatur von 90 bis 220 °C, gegebenenfalls im Vakuum, gegebenenfalls zusätzlich mit Durchleiten von inertem Strippgas, von gegebenenfalls vorhandenen Lösungs- oder Verdünnungsmittel und/oder vorzugsweise von überschüssigen, nicht-umgesetzten Isocyanaten befreit werden, so daß die Isocyanuratgruppen aufweisenden Polyisocyanate mit einem Gehalt an monomeren Isocyanaten von z.B. unter 1,0 Gew.-%, vorzugsweise unter 0,5 Gew.-%, besonders bevorzugt unter 0,3 Gew% erhältlich sind.

Als Apparate dafür dienen Flash-, Fallfilm-, Dünnschicht- und/oder Kurzwegverdampfer, denen gegebenenfalls eine kurze Kolonne aufgesetzt sein kann.

Das abgetrennte Destillat von monomerem Isocyanat wird bevorzugt in die Stufe a) zurückgeführt und von neuem, ergänzt um frisch zugeführtes Isocyanat, in die Reaktion eingesetzt. e) optional Ozonolyse des aus d) erhaltenen Destillationssumpfes.

Zur Reduzierung der Farbzahl kann das Isocyanuratgruppen enthaltenden Polyisocyanatgemisch optional mit einem ozonhaltigen Gas behandelt werden. Dies erfolgt am einfachsten durch Durchleiten eines ozonhaltigen Gases durch das Isocyanuratgruppen enthaltende Polyisocyanat.

Bevorzugt kann der Gasstrom bis zu 20 Vol.-% an Ozon enthalten.

Die Reaktionstemperatur sollte bei der Beimischung von Ozon 5 °C bis 170 °C, vorzugsweise 25 °C bis 100 °C betragen.

Es ist vorteilhaft, im bevorzugten mittleren Temperaturbereich zu arbeiten, da bei niedrigeren Temperaturen die Entfärbung sehr langsam vor sich geht und bei höheren Temperaturen eine teilweise Rückspaltung der Oligomeren auftreten kann.

Die Ozonbehandlung wird bei Normaldruck oder leichtem Überdruck bis ca. 200 kPa durchgeführt. Die Reaktionszeiten betragen in aller Regel 5 min bis 30 min. Die optimale Reaktionszeit kann durch wenige Vorversuche leicht ermittelt werden.

Auch Oligomerisierungsprodukte mit niedrigen Farbzahlen können noch weiter aufgehellt werden.

Die Viskosität des fertigen Produkts liegt grundsätzlich keiner Einschränkung. Sie beträgt üblicherweise bis zu 30.000 mPa*s, bevorzugt bis zu 10.000 mPas (bezogen auf das Polyisocyanatgemisch ohne Lösungsmittel). Bei hohen Viskositäten, die die Applikation der erhaltenen Polyisocyanate beschränken würden, wird das Polyisocyanatgemisch bevorzugt mit einem Lösungsmittel oder Lösungsmittelgermisch verdünnt.

In einer bevorzugten Form wird eine Viskosität von 2500-4000, insbesondere von 2500-3500 erhalten.

In einer weiteren bevorzugten Form wird eine Viskosität unter 1300 mPa*s, insbesondere < 700, insbesondere <350 mPas erhalten. In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Das fertige Produkt kann dann nach Abtrennung des unumgesetzten Isocyanats (D) abschließend, falls gewünscht, mit mindestens einem Lösungsmittel formuliert werden.

Beispiele für derartige Lösungsmittel sind aromatische und/oder (cyclo)aliphatische Kohlenwasserstoffe und deren Gemische, halogenierte Kohlenwasserstoffe, Ester und Ether.

Bevorzugt sind aromatische Kohlenwasserstoffe, (cyclo)aliphatische Kohlenwasserstoffe, Alkansäurealkylester, alkoxylierte Alkansäurealkylester und deren Gemische.

Besonders bevorzugt sind ein- oder mehrfach alkylierte Benzole und Naphthaline, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 -198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Der Gehalt an aliphatischen Kohlenwasserstoffen beträgt in der Regel weniger als 5, bevorzugt weniger als 2,5 und besonders bevorzugt weniger als 1 Gew%.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen, beispielsweise Petrolether oder Ligroin.

Weiterhin bevorzugt sind n-Butylacetat, Ethylacetat, 1-Methoxypropylacetat-2, 2-Methoxyethylacetat, sowie deren Gemische, insbesondere mit den oben aufgeführten aromatischen Kohlenwasserstoffgemischen.

Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1.

Weiterhin ist es möglich, die erfindungsgemäß erhaltenen Polyisocyanate, gegebenenfalls in Lösungsmittel und gegebenenfalls mit anderen Lackadditiven versehen, mit einem Stabilisator zu versetzen, bevorzugt mit mindestens einem Stabilisator ausgewählt aus der Gruppe bestehend aus Phosphiten, Phosphonaten, Phosphoniten, Thioverbindungen und sterisch gehinderten Phenolen.

Phosphite sind solche der Formel

P(OR²¹) (OR²²) (OR²³),

worin
R21, R²² und R²³ unabhängig voneinander C₁ - C₂₀-Alkyl, C₆ - C₁₂-Aryl und C₅ - C₁₂-Cycloalkyl bedeuten können, wobei die genannten Reste jeweils durch Aryl, Alkyl, Aryloxy, Alkyloxy, Heteroatome und/oder Heterocyclen substituiert sein können.

Bevorzugte Reste R²¹, R²² und R²³ sind gegebenenfalls durch Aryl, Alkyl, Aryloxy, Alkyloxy, Heteroatome und/oder Heterocyclen substituiertes C₆ - C₁₂-Aryl, insbesondere Phenyl und C₁ - C₂₀-Alkyl, insbesondere C₁ - C₄-Alkyl.

Besonders bevorzugte Phosphite sind Triphenylphosphit, Tri(n-butyl)phosphit, Tri(octyl)phosphit, Tri(nonylphenyl)phosphit, Tri(2,4-di tert. butyl phenyl)phosphit,

Phosphonate sind Verbindungen der Formel 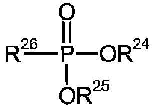 worin
R²⁴, R²⁵ und R²⁶ unabhängig voneinander C₁ - C₂₀-Alkyl, C₆ - C₁₂-Aryl und C₅ - C₁₂-Cycloalkyl bedeuten können, wobei die genannten Reste jeweils durch Aryl, Alkyl, Aryloxy, Alkyloxy, Heteroatome und/oder Heterocyclen substituiert sein können, und R²⁶ zusätzlich Wasserstoff bedeuten kann.

Dabei kann es sich um einkernige oder mehrkernige, aliphatisch, cycloaliphatisch und/oder aromatisch substituierte Phosphonate handeln.

Unter "mehrkernigen" Phosphonaten werden solche verstanden, die innerhalb eines Moleküls mehrere Phosphonatgruppen tragen, also einfach organisch substituierte Phosphoratome, die wiederum zwei organisch substituierte Sauerstoffatome und ein unsubstituiertes Sauerstoffatom tragen.

Bevorzugte Reste R²⁴ und R²⁵ sind unabhängig voneinander gegebenenfalls durch Aryl, Alkyl, Aryloxy, Alkyloxy, Heteroatome und/oder Heterocyclen substituiertes C₁ -C₂₀-Alkyl oder gegebenenfalls durch Aryl, Alkyl, Aryloxy, Alkyloxy, Heteroatome und/oder Heterocyclen substituiertes C₆ - C₁₂-Aryl, besonders bevorzugt gegebenenfalls durch Aryl, Alkyl, Aryloxy, Alkyloxy, Heteroatome und/oder Heterocyclen substituiertes C₆ - C₁₂-Aryl und insbesondere Phenyl oder sterisch gehindertes Aryl.

Der Begriff "sterisch gehindert" bedeutet dabei im Rahmen dieser Schrift, daß mindestens eine, bevorzugt beide ortho-Positionen bezogen auf die funktionelle Gruppe eine tert.-Butyl-Gruppe trägt.

Bevorzugt sind R²⁴ und R²⁵ unabhängig voneinander ausgewählt aus der Gruppe bestehend aus n-Butyl, Phenyl und Benzyl.

Besonders bevorzugt sind R²⁴ und R²⁵ gleich.

Der Rest R²⁶ ist bevorzugt Wasserstoff.

Phosphonite sind Verbindungen der Formel

P(OR²⁷) (OR²⁸) (R²⁹),

worin
R²⁷, R²⁸ und R²⁹ unabhängig voneinander C₁ - C₂₀-Alkyl, C₆ - C₁₂-Aryl und C₅ - C₁₂-Cycloalkyl bedeuten können, wobei die genannten Reste jeweils durch Aryl, Alkyl, Aryloxy, Alkyloxy, Heteroatome und/oder Heterocyclen substituiert sein können.

Dabei kann es sich um einkernige oder mehrkernige, aliphatisch, cycloaliphatisch und/oder aromatisch substituierte Phosphonite handeln.

Unter "mehrkernigen" Phosphoniten werden solche verstanden, die innerhalb eines Moleküls mehrere Phosphonitgruppen tragen, also einfach organisch substituierte Phosphoratome, die wiederum zwei organisch substituierte Sauerstoffatome tragen.

Bevorzugte Reste R²⁷ und R²⁸ sind gegebenenfalls durch Aryl, Alkyl, Aryloxy, Alkyloxy, Heteroatome und/oder Heterocyclen substituiertes C₆ - C₁₂-Aryl, insbesondere Phenyl oder sterisch gehindertes Aryl.

Bevorzugte Reste R²⁹ sind gegebenenfalls durch Aryl, Alkyl, Aryloxy, Alkyloxy, Heteroatome und/oder Heterocyclen substituiertes C₆ - C₁₂-Aryl, insbesondere Phenyl und p-Tolyl.

Beispiele für weitere Verbindungen diesen Typs sowie korrespondierenden Bis-ThioVerbindungen finden sich in US 4075163, die hiermit durch Bezugnahme Bestandteil der vorliegenden Anmeldung sind.

Für den Fall eines zweikernigen Phosphonites ist es bevorzugt, daß die Phosphonitgruppen über eine 4,4'-Biphenyleneinheit miteinander verbunden sind.

Bevorzugt ist die Verbindung Tetrakis-(2,4-di-tert.-butylphenyl)-4,4'-diphenylen-diphosphonit [CAS-Nr. 119345-01-6], die z.B. unter den Handelsnamen Irgafos® P-EPQ der Ciba Spezialitätenchemie und Hostanox® P-EPQ der Firma Clariant im Handel erhältlich ist, und die die folgende Strukturformel (mit R = H) aufweist:

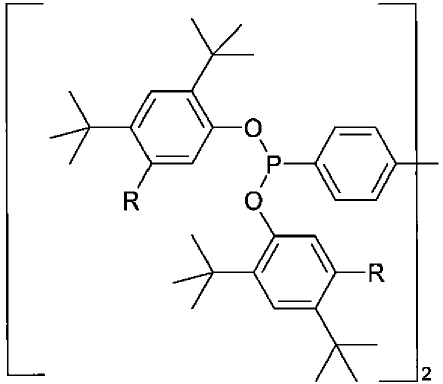

Tetrakis-(2,4-di-tert.-butylphenyl)-4,4'-diphenylen-diphosphonit ist technisch gut verfügbar und wird als Antioxidans für Thermoplasten eingesetzt.

Tetrakis-(2,4-di-tert.-butylphenyl)-4,4'-diphenylen-diphosphonit ist sehr gut in organischen Lösungsmitteln löslich. Es enthält aber herstellungsbedingt chlorhaltige Nebenkomponenten, die zu Trübungen führen können. Diese chlorhaltigen Nebenkomponenten können weitestgehend z.B. durch Extraktion dieser Verbindungen mit Wasser aus einer organischen Lösung extrahiert werden, beispielsweise mit Hexan oder Methylenchlorid gegen Wasser oder eine gesättigte Kochsalzlösung und anschließend beispielsweise über Magnesiumsulfat getrocknet werden.

Solche aufgereinigte Formen dieser Verbindung sind ganz besonders für das erfindungsgemäße Verfahren bevorzugt, da Trübungen in den erfindungsgemäßen Polyisocyanatzusammensetzungen oder in den fertigen Lacken unerwünscht sind.

Bevorzugt ist auch die Verbindung Tetrakis-(2,4-di-tert-butyl-5-methylphenyl)-[1,1'-biphenyl]-4,4'-diylbisphosphonit (oder alternativ Tetrakis-(2,4-di-tert.-butyl-5-methylphenyl)-4,4'-diphenylen-diphosphonit), das unter dem Handelsnamen GSY-P 101 der Fa. API Corporation bzw. Yoshitomi vertrieben wird, und die oben stehende Strukturformel mit R = Methyl aufweist.

Die beiden letztgenannten Verbindungen sind toxikologisch unproblematisch, verglichen mit Phosphiten fast geruchlos und hydrolysestabil, so daß sie gesundheitlich und arbeitshygienisch vorteilhaft sind.

Thioverbindungen sind solche, die mindestens eine Thioethergruppe enthalten, also ein Schwefelatom, das mit zwei gleichen oder verschiedenen organischen Substituenten substituiert ist.

Bevorzugt sind Thioether der Formel

R³¹-S-R³²

worin
R³¹ und R³² unabhängig voneinander C₁ - C₂₀-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₂ - C₁₈-Alkenyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können, sein können.

Darin bedeutet
gegebenenfalls durch ein oder mehrere Sauerstoff- und/oder Schwefelatome und/oder ein oder mehrere substituierte oder unsubstituierte Iminogruppen unterbrochenes C₂ -C₁₈-Alkyl beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Die Anzahl der Sauerstoff- und/oder Schwefelatome und/oder Iminogruppen ist nicht beschränkt. In der Regel beträgt sie nicht mehr als 5 in dem Rest, bevorzugt nicht mehr als 4 und ganz besonders bevorzugt nicht mehr als 3.

Weiterhin befinden sich zwischen zwei Heteroatomen in der Regel mindestens ein Kohlenstoffatom, bevorzugt mindestens zwei.

Substituierte und unsubstituierte Iminogruppen können beispielsweise Imino-, Methylimino-, *iso*-Propylimino, n-Butylimino oder *tert*-Butylimino sein.

Weiterhin bedeutet
gegebenenfalls durch Aryl, Alkyl, Aryloxy, Alkyloxy, Heteroatome und/oder Heterocyclen substituiertes C₂ - C₁₈-Alkenyl beispielsweise Vinyl, 1-Propenyl, Allyl, Methallyl, 1,1-Dimethylallyl, 2-Butenyl, 2-Hexenyl, Octenyl, Undecenyl, Dodecenyl, Octadecenyl, 2-Phenylvinyl, 2-Methoxyvinyl, 2-Ethoxyvinyl, 2-Methoxyallyl, 3-Methoxyallyl, 2-Ethoxyallyl, 3-Ethoxyallyl oder 1- oder 2-Chlorvinyl,
gegebenenfalls durch Aryl, Alkyl, Aryloxy, Alkyloxy, Heteroatome und/oder Heterocyclen substituiertes C₆ - C₁₂-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso-*Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl,
gegebenenfalls durch Aryl, Alkyl, Aryloxy, Alkyloxy, Heteroatome und/oder Heterocyclen substituiertes C₅ - C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl, und
ein fünf- bis sechsgliedriger, Sauerstoff-, Stickstoff- und/oder Schwefelatome aufweisender Heterocyclus beispielsweise Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl.

Als bevorzugte Thioether seien genannt: 2-Methyl-1-propenyl-tert.-dodecylthioether, Cyclohexylidenmethyl-n-dodecylthioether, 3-Cyclohexen-(1)-ylidenmethyl-n-octadecylthioether, 3-Cyclohexen-(1)-ylidenmethyl-n-dodecylthioether, 3-Cyclohexen-(1)-ylidenmethyl-n-octylthioether 3-Cyclohexen-(1)-ylidenmethyl-cyclohexylthioether, 3-Methyl-(3)-cyclohexen-(1)-ylidenmethyl-n-dodecylthioether, 3-Cyclohexen-(1)-yliden-methyl-p-tolylthioether, 3-Cyclohexen-(1)-ylidenmethyl-benzylthioether und vorzugsweise 3-Cyclohexen-(1)-ylidenmethyl-n-dodecylthioether und 1-Hexenyl-n-dodecylthioether.

Besonders bevorzugte Thioether sind solche der Formel 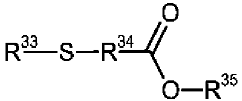 worin
R³³ und R³⁵ unabhängig voneinander C₁ - C₂₀-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₂₀-Alkyl, C₆ - C₁₂-Aryl oder C₅ - C₁₂-Cycloalkyl, wobei die genannten Reste jeweils durch Aryl, Alkyl, Aryloxy, Alkyloxy, Heteroatome und/oder Heterocyclen substituiert sein können, sein können, und
R³⁴ C₂-C₂₀-Alkylen, C₅-C₁₂-Cycloakylen oder durch ein- oder mehrere Sauerstoff- und/oder Schwefelatome und/oder ein oder mehrere substituierte oder unsubstituierte Iminogruppen und/oder durch eine oder mehrere Cycloalkyl-, -(CO)-, -O(CO)O-, -(NH)(CO)O-, -O(CO)(NH)-, -O(CO)- oder -(CO)O-Gruppen unterbrochenes C₂-C₂₀-Alkylen, wobei die genannten Reste jeweils durch Aryl, Alkyl, Aryloxy, Alkyloxy, Heteroatome und/oder Heterocyclen substituiert sein können.

Darin bedeuten C₁ - C₂₀-Alkylen lineares oder verzweigtes Alkylen, z.B. Methylen, 1,2-Ethylen, 1,2- oder 1,3-Propylen, 1,2-, 1,3- oder 1,4-Butylen, 1,1-Dimethyl-1,2-ethylen oder 1,2-Dimethyl-1,2-ethylen, 1,6-Hexylen, 1,8-Octylen, 1,10-Decylen, 1,12-Dodecylen und 1,20-Eicosylen, und
C₃ - C₁₂-Cycloalkylen beispielsweise Cyclopropylen, Cyclopentylen, Cyclohexylen, Cyclooctylen und Cyclododecylen.

Bevorzugt ist der Rest R³³ gegebenenfalls substituiertes C₆ - C₁₂-Aryl oder C₁ - C₂₀-Alkyl, besonders bevorzugt gegebenenfalls substituiertes C₁ - C₂₀-Alkyl, ganz besonders bevorzugt unsubstituiertes C₁ - C₂₀-Alkyl.

Bevorzugt ist der Rest R³⁵ gegebenenfalls substituiertes C₁ - C₂₀-Alkyl, besonders bevorzugt unsubstituiertes C₁ - C₂₀-Alkyl.

Bevorzugt handelt es sich bei dem Rest R³⁴ um Methylen, 1,2-Ethylen oder 1,2-Propylen, besonders bevorzugt 1,2-Ethylen.

Ganz besonders bevorzugte Thioether sind solche, in denen mindestens einer der Reste R³¹ und R³², bevorzugt beide, gleiche oder verschiedene C₁ - C₂₀-Alkyl-oxycarbonylalkyl-, bevorzugt C₁ - C₂₀-Alkyl-oxycarbonylethylgruppen bedeuten.

Insbesondere bevorzugt sind Verbindungen der Formel 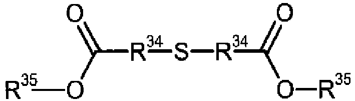 worin R³⁴ und R³⁵ die oben genannten Bedeutungen haben.

In einer bevorzugten Ausführungsform enthalten die Thioether noch weitere funktionelle Gruppen, die ggf. die antioxidante Wirkung und/oder die Löslichkeit der Thioether in der Polyisocyanatzubereitung verbessern.

Bevorzugte Thioether sind Thiodipropionsäureester, zum Beispiel, 3,3'-Thiodipropionsäure-dimethylester [4131-74-2], 3,3'-Thiodipropionsäure-ditetradecylester [16545-54-3], 3,3'-Thiodipropionsäure-dioctadecylester [693-36-7]. Insbesondere bevorzugt sind 3,3'-Thiodipropionsäure-ditridecylester [10595-72-9] (z.B. Evanstab® 13 der Fa. Evans Chemetics), 3,3'-Thiodipropionsäure-didodecylester [123-28-4] (z.B. Irganox® PS 800 FL der Fa. Ciba Specialty Chemicals; Evanstab® 12 der Fa. Evans Chemetics).

3,3'-Thiodipropionsäure-ditridecylester ist flüssig und damit für Lackkomponenten und seine Dosierung besonders gut geeignet. 3,3'-Thiodipropionsäure-didodecylester und und 3,3'-Thiodipropionsäure-ditetradecylester sind aufgrund ihrer niedrigen Schmelzpunkte ebenfalls gut geeignet. Insbesondere 3,3'-Thiodipropionsäure-didodecylester (und 3,3'-Thiodipropionsäure-dioctadecylester) sind toxikologisch sehr gut untersucht und für den Menschen unbedenklich. Sie sind lediglich leicht wassergefährdend.

Eine Vielzahl der 3,3'-Thiodipropionsäureester steht großtechnisch zur Verfügung.

Die Thioether, insbesondere die 3,3'-Thiodipropionsäureester, sind in der Regel hydrolysestabil.

Auch zeigen die zuletzt genannten 3,3'-Thiodipropionsäureester verglichen mit den Phosphiten des Standes der Technik keine Geruchsbelastung.

Besonders bevorzugte Thioether sind solche, die bei 23 °C flüssig sind oder einen Schmelzpunkt unter 50 °C aufweisen.

Optional kann mindestens ein sterisch gehindertes Phenol anwesend sein, bevorzugt ist mindestens ein, besonders bevorzugt genau ein Phenol anwesend. Phenole haben im Sinne der Erfindung die Funktion eines primären Antioxidans. Darunter werden vom Fachmann üblicherweise Verbindungen verstanden, die Radikale abfangen.

Beispiele für Phenole sind Alkylphenole, beispielsweise o-, m- oder p-Kresol (Methylphenol), 2-tert.-Butyl-4-methylphenol, 6-tert.-Butyl-2,4-dimethyl-phenol, 2,6-Di-tert.-Butyl-4-methylphenol, 2-tert-Butylphenol, 4-tert.-Butylphenol, 2,4-di-tert.-Butylphenol, 2-Methyl-4-tert.-Butylphenol, 4-tert-Butyl-2,6-dimethylphenol, oder 2,2'-Methylen-bis-(6-tert.-butyl-4-methylphenol), 4,4'-Oxydiphenyl, 3,4-Methylendioxydiphenol (Sesamol), 3,4-Dimethylphenol, Hydrochinon, Brenzcatechin (1,2-Dihydroxybenzol), 2-(1'-Methylcyclohex-1'-yl)-4,6-dimethylphenol, 2- oder 4-(1'-Phenyl-eth-1'-yl)-phenol, 2-tert-Butyl-6-methylphenol, 2,4,6-Tris-tert-Butylphenol, 2,6-Di-tert.-butylphenol, 2,4-Di-tert.-butylphenol, 4-tert.-Butylphenol, Nonylphenol [11066-49-2], Octylphenol [140-66-9], 2,6-Dimethylphenol, Bisphenol A, Bisphenol F, Bisphenol B, Bisphenol C, Bisphenol S, 3,3',5,5'-Tetrabromobisphenol A, 2,6-Di-tert-Butyl-p-kresol, Koresin® der BASF AG, 3,5-Di-tert-Butyl-4-hydroxybenzoesäuremethylester, 4-tert-Butylbrenzcatechin, 2-Hydroxybenzylalkohol, 2-Methoxy-4-methylphenol, 2,3,6-Trimethylphenol, 2,4,5-Trimethylphenol, 2,4,6-Trimethylphenol, 2-Isopropylphenol, 4-Isopropylphenol, 6-Isopropyl-m-Kresol, n-Octadecyl-β-(3,5-di-tert-butyl-4-hydroxyphenyl)propionat, 1,1,3-Tris-(2-methyl-4-hydroxy-5-tert-butylphenyl)butan, 1,3,5-Trimethyl-2,4,6-tris-(3,5-di-tert-butyl-4-hydroxybenzyl)benzol, 1,3,5,-Tris-(3,5-di-tert-butyl-4-hydroxybenzyl)isocyanurat, 1,3,5,-Tris-(3,5-di-tert-butyl-4-hydroxyphenyl)-propionyloxyethyl-isocyanurat, 1,3,5-Tris-(2,6-dimethyl-3-hydroxy-4-tert-butylbenzyl)-isocyanurat oder Pentaerythrit-tetrakis-[β-(3,5,-di-tert-butyl-4-hydroxyphenyl)-propionat], 2,6-Di-*tert*-butyl-4-dimethylaminomethyl-phenol, 6-*iso*.-Butyl-2,4-dinitrophenol, 6-*sek*.-Butyl-2,4-dinitrophenol, Irganox® 565, 1141, 1192, 1222 und 1425 der Firma Ciba Spezialitätenchemie, 3-(3',5'-Di-*tert*.-butyl-4'-hydroxyphenyl)propionsäureoctadecylester, 3-(3',5'-Di-*tert*.-butyl-4'-hydroxyphenyl)propionsäurehexadecylester, 3-(3',5'-Di-*tert*.-butyl-4'-hydroxyphenyl)propionsäureoctylester, 3-Thia-1,5-pentandiol-bis-[(3',5'-di-*tert*.-butyl-4'-hydroxyphenyl)propionat], 4,8-Dioxa-1,11-undecandiol-bis-[(3',5'-di-*tert*.-butyl-4'-hydroxyphenyl)propionat], 4,8-Dioxa-1,11-undecandiol-bis-[(3'-*tert*.-butyl-4'-hydroxy-5'-methylphenyl)propionat], 1,9-Nonandiol-bis-[(3',5'-di-*tert*.-butyl-4'-hydroxyphenyl)propionat], 1,7-Heptandiamin-bis[3-(3',5'-di-*tert*.-butyl-4'-hydroxyphenyl)propionsäureamid], 1,1-Methandiamin-bis[3-(3',5'-di-*tert*.-butyl-4'-hydroxyphenyl)propionsäureamid], 3-(3',5'-di-*tert*.-Butyl-4'-hydroxyphenyl)propionsäurehydrazid, 3-(3',5'-di-Methyl-4'-hydroxyphenyl)propionsäurehydrazid, Bis(3-*tert.*-Butyl-5-ethyl-2-hydroxy-phen-1-yl)methan, Bis(3,5-di-*tert*.-Butyl-4-hydroxy-phen-1-yl)methan, Bis[3-(1'-methylcyclohex-1'-yl)-5-methyl-2-hydroxy-phen-1-yl]methan, Bis(3-*tert*.-Butyl-2-hydroxy-5-methyl-phen-1-yl)methan, 1,1-Bis(5-*tert*.-Butyl-4-hydroxy-2-methyl-phen-1-yl)ethan, Bis(5-*tert*.-Butyl-4-hydroxy-2-methyl-phen-1-yl)sulfid, Bis(3-*tert*.-Butyl-2-hydroxy-5-methyl-phen-1-yl)sulfid, 1,1-Bis(3,4-Dimethyl-2-hydroxy-phen-1-yl)-2-methylpropan, 1,1-Bis(5-*tert*.-Butyl-3-methyl-2-hydroxy-phen-1-yl)-butan, 1,3,5-Tris[1'-(3",5"-di-*tert.*-Butyl-4"-hydroxy-phen-1"-yl)-meth-1'-yl]-2,4,6-trimethylbenzol, 1,1,4-Tris(5'-*tert.*-Butyl-4'-hydroxy-2'-methyl-phen-1'-yl)butan, Aminophenole, wie z.B. para-Aminophenol, 3-Diethylaminophenol, Nitrosophenole, wie z.B. para-Nitrosophenol, p-Nitroso-o-Kresol, Alkoxyphenole, beispielsweise 2-Methoxyphenol (Guajacol, Brenzcatechinmonomethylether), 2-Ethoxyphenol, 2-Isopropoxyphenol, 4-Methoxyphenol (Hydrochinonmonomethylether), Mono- oder Di-tert.-Butyl-4-methoxyphenol, 3,5-Di-tert-butyl-4-hydroxyanisol, 3-Hydroxy-4-methoxybenzylalkohol, 2,5-Dimethoxy-4-hydroxybenzylalkohol (Syringaalkohol), 4-Hydroxy-3-methoxybenzaldehyd (Vanillin), 4-Hydroxy-3-ethoxybenzaldehyd (Ethylvanillin), 3-Hydroxy-4-methoxybenzaldehyd (Isovanillin), 1-(4-Hydroxy-3-methoxy-phenyl)ethanon (Acetovanillon), Eugenol, Dihydroeugenol, Isoeugenol, Tocopherole, wie z.B. α -, β-, γ-, δ- und ε-Tocopherol, Tocol, α-Tocopherolhydrochinon, Hydrochinon oder Hydrochinonmonomethylether, 2,5-Di*-tert.-*Butylhydrochinon, 2-Methyl-p-hydrochinon, 2,3-Dimethylhydrochinon, Trimethylhydrochinon, 4-Methylbrenzcatechin, tert-Butylhydrochinon, 3-Methylbrenzcatechin, 2-Methyl-p-hydrochinon, 2,3-Dimethylhydrochinon, Trimethylhydrochinon, 3-Methylbrenzcatechin, 4-Methylbrenzcatechin, tert-Butylhydrochinon, 4-Ethoxyphenol, 4-Butoxyphenol, Hydrochinonmonobenzylether, p-Phenoxyphenol, 2-Methylhydrochinon, 2,5-Di-tert.-Butylhydrochinon, 2,5-Di-tert.-Amylhydrochinon, sowie 2,3-Dihydro-2,2-dimethyl-7-hydroxybenzofuran (2,2-Dimethyl-7-hydroxycumaran), 6-Hydroxy-2,5,7,8-tetramethylchroman-2-carbonsäure (Trolox®), Gallussäure, Ferulasäure, Zimtsäure und deren Derivate.

Sterisch gehinderte Phenole sind solche, die genau eine phenolische Hydroxygruppe aufweisen und weisen in mindestens einer, bevorzugt beiden ortho-Positionen bezogen auf die funktionelle OH-Gruppe eine tert.-Butyl-Gruppe auf.

Solche Phenole können auch Bestandteile eines polyphenolischen Systems mit mehren Phenol-Gruppen sein wie Pentaerythrit-tetrakis-[β-(3,5,-di-tert-butyl-4-hydroxyphenyl)-propionat] (z.B. Irganox® 1010), Irganox® 1330, 1,3,5-tris(3,5-di-tert.-butyl-4-hydroxybenzyl)-1,3,5-triazin-2,4,6(1H,3H,5H)-trion (z.B. Irganox® 3114), jeweils Produkte der Ciba Spezialitätenchemie.

Entsprechende Produkte sind z.B. unter den Handelsnamen Irganox® (Ciba Spezialitätenchemie), Sumilizer® der Firma Sumitomo, Lowinox® der Fa. Great Lakes, Cyanox® der Fa. Cytec erhältlich.

Bevorzugt werden die primären Antioxidantien (oder deren Gemische) in Kombination mit einem der sekundären Antioxidantien aus der Gruppe der Phosphite, Phosphonate, Phosphonite, oder Thioverbindungen (oder deren Gemische) eingesetzt.

Sterisch gehinderte Phenole können prinzipiell auch alleine eingesetzt werden, jedoch weisen Sie zusammen mit sekundären Antioxidantien normalerweise einen synergistischen stabilisierenden Effekt auf, weshalb diese Kombination besonders bevorzugt ist.

Die Zugabe mindestens eines der genannten Stabilisatoren zu den erfindungsgemäß erhaltenen Polyisocyanaten ist besonders dann bevorzugt, wenn das Polyisocyanat mit mindestens einem Katalysator versetzt ist, der die Umsetzung von Isocyanatgruppen mit gegenüber Isocyanat reaktiven Gruppen zu beschleunigen vermag. Dies ist beispielsweise dann der Fall, wenn Polyurethanlacke hergestellt werden sollen und die Polyisocyanatkomponente als Vernetzer mit einen Polyol als Bindemittel gehärtet werden soll.

In Anwesenheit von mindestens einem Katalysator, der die Umsetzung von Isocyanat-gruppen mit gegenüber Isocyanat reaktiven Gruppen zu beschleunigen vermag, gegebenenfalls zusätzlich in Anwesenheit von Lösungsmitteln (und gegebenenfalls anderen üblichen Lackadditiven) wirkt sich die Anwesenheit von mindestens einem der genannten Stabilisatoren positiv auf die Beibehaltung niedriger Farbzahlen bei Lagerung aus, insbesondere bei Lagerung bei Temperaturen größer als Raumtemperatur.

Verbindungen, die die Umsetzung von Isocyanatgruppen mit gegenüber Isocyanat reaktiven Gruppen zu beschleunigen vermögen, sind solche Verbindungen, die durch ihre Anwesenheit in einem Eduktgemisch zu einem höheren Anteil an urethangruppenhaltigen Reaktionsprodukten führen als das gleiche Eduktgemisch in deren Abwesenheit unter denselben Reaktionsbedingungen.

Diese Verbindungen sind literaturbekannt, beispielsweise aus G. Oertel (Hrsg.), Polyurethane, 3. Auflage 1993, Carl Hanser Verlag, München - Wien, Seiten 104 bis 110, Kapitel 3.4.1. "Katalysatoren", bevorzugt sind organische Amine, insbesondere tertiäre aliphatische, cycloaliphatische oder aromatische Amine, Brønsted-Säuren und/oder Lewis-saure Organometallverbindungen, besonders bevorzugt sind Lewis-saure Organometallverbindungen.

Als Lewis-saure organische Metallverbindungen kommen z.B. Zinnverbindungen in Frage, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Zudem können Zink-(II)-Salze eingesetzt werden, wie beispielsweise Zink-(II)-dioctoat.

Wenn nicht anders angegeben kann es sich bei den Carbonsäuren, z.B. bei Octoat, um verzweigte und/oder unverzweigte Isomere handeln, bevorzugt um unverzweigte.

Auch Metallkomplexe wie Acetylacetonate des Eisens, Titans, Aluminiums, Zirkons, Mangans, Nickels, Zinks und Cobalts sind möglich.

Weitere Metallkatalysatoren werden von Blank et al. in Progress in Organic Coatings, 1999, Vol. 35, Seiten 19-29 beschrieben.

Als Zinn- und Zink-freie Alternativen werden u.a. Zirkonium, Wismut und AluminiumVerbindungen eingesetzt. Dies sind z.B. Zirkoniumtetraacetylacetonat (z.B. K-KAT® 4205 der Firma King Industries); Zirkoniumdionate (z.B. K-KAT® XC-9213; XC-A209 und XC-6212 der Firma King Industries); Wismut-Verbindungen, insbesondere Tricarboxylate (z.B. K-KAT® 348, XC-B221; XC-C227, XC 8203 der Firma King Industries); Aluminiumdionat (z.B. K-KAT® 5218 der Firma King Industries). Zinn- und Zink-freie Katalysatoren werden ansonsten z.B. auch unter dem Handelsnamen Borchi® Kat der Firma Borchers, TK der Firma Goldschmidt oder BICAT® der Firma Shepherd, Lausanne angeboten.

Diese Katalysatoren sind für lösungsmittel-, wasser-basierte und/oder blockierte Systeme geeignet.

Molybdän-, Wofram- und Vanadium-Katalysatoren, werden insbesondere für den Umsatz blockierter Polyisocyanate unter WO 2004/076519 und WO 2004/076520 beschrieben.

Auch Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Dioctylzinn-dilaurat, Zink-(II)-dioctoat, Zirkon-Acetylacetonat und Zirkon-2,2,6,6-tetramethyl-3,5-heptandionat.

Besonders bevorzugt ist jedoch Dibutylzinndilaurat.

Bei den Bindemitteln kann es sich beispielsweise um Polyacrylatpolyole, Polyesterpolyole, Polyetherpolyole, Polyurethanpolyole; Polycarbonatpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Kopolymerisate mit Allylethern, Propfpolymerisate aus den genannten Stoffgruppen mit z.B. unterschiedlichen Glasübergangstemperaturen, sowie Mischungen der genannten Bindemittel handeln. Bevorzugt sind Polyacrylatpolyole, Polyesterpolyole und Polyetherpolyole.

Solche Verbindungen und deren Verwendung in Polyurethanlacken sind dem Fachmann an sich bekannt und brauchen nicht weiter ausgeführt zu werden.

Die erfindungsgemäß erhaltenen Polyisocyanate können verwendet werden zur Herstellung von Polyurethanen und Polyurethanlacken, beispielsweise für einkomponentige, zweikomponentige, strahlungshärtbare oder Pulverlackbeschichtungssysteme sowie damit hergestellt Lacke zur Beschichtung von verschiedenen Substraten, wie z. B. Holz, Holzfurnier, Papier, Pappe, Karton, Textil, Leder, Vlies, Kunststoffoberflächen, Glas, Keramik, mineralische Baustoffe, Metalle oder beschichtete Metalle.

Bei einer Verwendung in Beschichtungsmitteln können die erfindungsgemäßen Polyisocyanate insbesondere in Grundierungen, Füllern, pigmentierten Decklacken, Basislacken und Klarlacken im Bereich Autoreparatur- oder Großfahrzeuglackierung eingesetzt werden. Besonders geeignet sind solche Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung sowie bei Nutzfahrzeugen im landwirtschaftlichen und Baubereich.

Derartige Beschichtungsmassen eignen sich als oder in Außenbeschichtungen, also solche Anwendungen, die dem Tageslicht ausgesetzt sind, bevorzugt von Gebäudeteilen, Innenbeschichtungen, Beschichtungen auf (Groß-)Fahrzeugen und Flugzeugen und industriellen Anwendungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl. Insbesondere werden die erfindungsgemäßen Beschichtungsmassen als oder in Automobilklar- und -decklacke(n) eingesetzt. Weitere bevorzugte Einsatzgebiete sind Can-Coating und Coil-Coating.

Besonders eignen sie sich als Grundierungen, Füller, pigmentierte Decklacke und Klarlacke im Bereich Industrie-, Holz-, Auto-, insbesondere OEM- Lackierung, oder Dekolackierung eingesetzt werden. Ganz besonders geeignet sind die Beschichtungsmittel für Anwendungen, in denen eine besonders hohe Applikationssicherheit, Außenwitterungsbeständigkeit, Optik, Kratzbeständigkeit, Lösemittel- und/oder Chemikalienbeständigkeit gefordert werden. Durch ihre niedrige Farbzahl und hohe Farbstabilität sind sie insbesondere für Beschichtungsmassen für Klarlacke interessant. Sie sind insbesondere interessant in Kombination mit Antioxidantien und Lewis-sauren Verbindungen, gegebenenfalls in Anwesenheit von Lösungsmittel, insbesondere bei Lagerung.

### Beispiele

### Vergleichsbeispiel 1 (ohne Urethanisierung und ohne Alkoholzugabe)

588 g 1,6-Hexamethylendiisocyanat (HDI), erhalten durch Phosgenierung von 1,6-Hexamethylendiamin, wurden bei Raumtemperatur (23 °C) vorgelegt, 1 h unter Stickstoff gehalten und anschließend auf 40°C erhitzt. Es erfolgte die Zugabe von DABCO TMR® der Firma Air Products.

Anschließend wurde auf 60°C aufgeheizt. Nach Erreichen eines NCO-Wertes von 40,1 % wurde die Reaktion mit einem äquimolaren Anteil von XHC-20 (Fa. Huntsman, in obiger Formel (I) X=O, R¹=2-Hydroxyethyl, R²=H), bezogen auf den eingesetzten Katalysator, bei 65 °C abgebrochen. Nach Zusatz dieses Stoppers beobachtete man eine Temperaturerniedrigung, d.h. der eingesetzte Katatalysator war nicht mehr aktiv. Nach einer Filtration wurde das überschüssige HD1 in einem Dünnschichtverdampfer bei 170°C Außentemperatur fast vollständig entfernt.

| | |
|---|---|
| Farbzahlen nach Destillation: | 39 Hz |
| Viskosität nach Destillation: | 2400 mPas |

### Vergleichsbeispiel 2 (ohne Urethanisierung und ohne Alkoholzugabe)

Der Versuch aus Vergleichsbeispiel 1 wurde mit HDI wiederholt, erhalten durch Umsetzung von 1,6-Hexamethylendiamin mit Harnstoff und n-Butanol und thermischer Spaltung der erhaltenen Carbamate.

| | |
|---|---|
| Farbzahlen nach Destillation: | 42 Hz |
| Viskosität nach Destillation: | 2550 mPas |

### Vergleichsbeispiel 3 (mit Ethanol zur Urethanisierung statt höherem Alkohol):

588 g frisch destilliertes HDI, erhalten aus einem Phosgenierungsverfahren, wurden mit 12 g Ethanol versetzt und 2 Stunden bei 80°C gerührt. Die Temperatur wurde dann auf 65°C abgesenkt. Dann erfolgte die Zugabe 160 ppm DABCO® TMR. Bei einem NCO-Wert von 41,6% erfolgte Zugabe einer äquimolaren Menge XHC-20 (Fa. Huntsman, in obiger Formel (I) X=O, R'=2-Hydroxyethyl, R²=H), bezogen auf den eingesetzten Katalysator.

Es wurde 1 Stunde nachgerührt und erneut der NCO-Wert gemessen.

NCO-Wert nach der Nachreaktion: 41,5%.

Nach der Filtration wurde das überschüssige HDI in einem Dünnschichtverdampfer bei 170°C Außentemperatur fast vollständig entfernt.

| | |
|---|---|
| Farbzahl nach Destillation: | 34 Hz |
| Viskosität nach Destillation: | 1980 mPas |

Die Farbzahl bei Einsatz von Ethanol zur Urethanisierung ist mit 34 Hz nicht so gut wie mit den erfindungsgemäßen Beispielen mit höheren Alkoholen. Dazu kommen für eine Produktion noch die potentiellen Komplikationen durch das Monourethan aus Ethanol und Hexamethylendiisocyanat als flüchtigere Nebenkomponente.

Vergleichsbeispiel 4 (ohne vorherige Urethanisierung, ohne chemischen Stopper, mit thermischer Stoppung):
588 g 1,6-Hexamethylendiisocyanat (HDI), erhalten durch Phosgenierung von 1,6-Hexamethylendiamin wurden bei Raumtemperatur (23 °C) vorgelegt, unter Stickstoff 1 h gehalten und anschließend auf 40°C erhitzt. Es erfolgte die Zugabe von 60 ppm N,N,N- Trimethyl-N-benzylammoniumhydroxid in Form einer 3 %igen Lösung in 2-Ethylhexanol.

Die Temperatur stieg von 40°C auf 52°C an. Anschließend wurde auf 60°C aufgeheizt. Der NCO-Wert erreichte nach einer Nachreaktionszeit von 100 min 40,6%.

Durch Erhitzen auf 120°C wurde die Reaktion gestoppt. Nach der Filtration wurde das überschüssige HDI in einem Dünnschichtverdampfer bei 170°C Außentemperatur fast vollständig entfernt.

Man erhielt ein gelblich gefärbtes Produkt.

| | |
|---|---|
| Farbzahl nach Destillation: | 78 Hz |
| NCO-Gehalt nach Destillation: | 21,7% |
| Viskosität nach Destillation: | 2400 mPas |

Vergleichsbeispiel 5 (ohne vorherige Urethanisierung, mit nicht erfindungsgemäßem chemischen Stopper):
Die Verarbeitung erfolgte analog Vergleichsbeispiel 4, jedoch wurde nach Erreichen eines NCO-Wertes von 40,4% die Reaktion mit einem molaren Anteil von Benzoylchlorid, bezogen auf den eingesetzten Katalysator, bei 65 °C abgebrochen.

| | |
|---|---|
| Farbzahlen nach Destillation: | 41 Hz |
| Viskosität nach Destillation: | 2450 mPas |

### Beispiel 1:

1,6-Hexamethylendiisocyanat aus einem Phosgenprozess wurde in Gegenwart von 0,7 Gew% 2-Ethylhexanol bei einer Temperatur von 95 °C über 90 min gerührt. Anschließend setzte man 65 Gew.ppm (2-Hydroxypropyl)-N,N,N-trimethylammonium-2-ethylhexanoat-Lösung (DABCO® TMR) als Katalysator für die Trimerisierung hinzu und ließ bei 65 °C reagieren.

Bei einem NCO-Wert von 40,5 Gew% des Reaktionsgemischs wurde die Reaktion durch Zugabe von 150 Gew.ppm 2-Hydroxyethylcarbamat abgebrochen. Das überschüssige, monomere Isocyanat wurde durch Vakuumdestillation bei 145°C entfernt.

| | |
|---|---|
| Farbzahl nach Destillation: | 23 Hz |
| NCO-Gehalt nach Destillation: | 21,0 % |
| Viskosität nach Destillation: | 3100 mPa*s. |

Das erfindungsgemäße Beispiel zeigt eine niedrigere Farbzahl als die Vergleichsbeispiele.

### Beispiel 2:

Analog Beispiel 1 wurde ein Produkt mit gleichen Startmaterialien zu einem früheren Zeitpunkt gestoppt. Dabei wurde ein Polyisocyanatgemisch mit folgenden analytischen Daten erhalten:

| | |
|---|---|
| Farbzahl nach Destillation: | 23 Hz |
| NCO-Gehalt nach Destillation: | 21,3 % |
| Viskosität nach Destillation: | 2680 mPa*s |

### Beispiel 3:

1,6-Hexamethylendiisocyanat aus einem Phosgenprozess wurde in Gegenwart von 1,0 Gew% 2-Ethylhexanol 40 Minuten bei einer Temperatur von 100 °C gerührt. Anschließend setzte man 120 ppm (2-Hydroxypropyl)-N,N,N-trimethylammonium-2-ethylhexanoat (DABCO® TMR1) als Katalysator (7,5%ig verdünnt in Ethylenglykolmonomethylether) für die Trimerisierung hinzu und ließ bei 65 °C reagieren.

Bei einem NCO-Wert von 40,9 Gew% des Reaktionsgemischs wurde die Reaktion durch Zugabe von einem dreifachen Überschuß an 2-Hydroxyethylcarbamat (20 %ige Lösung in Ethylenglykol monomethylether) abgebrochen. Das überschüssige, monomere Isocyanat wurde durch Vakuumdestillation bei 145°C entfernt.

Dabei wurde ein Polyisocyanatgemisch mit folgenden analytischen Daten erhalten:

| | |
|---|---|
| Farbzahl nach Destillation: | 21 Hz |
| NCO-Gehalt nach Destillation: | 20,8 % |
| Viskosität nach Destillation: | 2280 mPa*s |
| Restmonomer nach Destillation: | 0,21 % |

### Beispiel 4:

1,6-Hexamethylendiisocyanat aus einem Harnstoffverfahren wurde in Gegenwart von 1,0 Gew% 2-Ethylhexanol 40 Minuten bei einer Temperatur von 70 °C gerührt. Anschließend setzte man 170 ppm (2-Hydroxypropyl)-N,N,N-trimethylammonium-2-ethylhexanoat (DABCO® TMR1) als Katalysator (7,5%ig verdünnt in Ethylenglykolmonomethylether) für die Trimerisierung hinzu und ließ bei 65 °C reagieren.

Bei einem NCO-Wert von 40,5 Gew% des Reaktionsgemischs wurde die Reaktion durch Zugabe von einem dreifachen Überschuß an 2-Hydroxyethylcarbamat (20 %ige Lösung in Ethylenglykol monomethylether) abgebrochen. Das überschüssige, monomere Isocyanat wurde durch Vakuumdestillation bei 145°C entfernt.
Dabei wurde ein Polyisocyanatgemisch mit folgenden analytischen Daten erhalten:

| | |
|---|---|
| Farbzahl nach Destillation: | 19 Hz |
| NCO-Gehalt nach Destillation: | 19,7 % |
| Viskosität nach Destillation: | 4740 mPa*s |

### Beispiel 5:

1,6-Hexamethylendiisocyanat aus einem Harnstoffprozess wurde in Gegenwart von 0,5 Gew% 2-Ethylhexanol etwa 20 Minuten bei einer Temperatur von 90 °C gerührt. Anschließend setzte man 130 Gew.ppm (2-Hydroxypropyl)-N,N,N-trimethylammonium-2-ethylhexanoat (DABCO® TMR1) als Katalysator (7,5%ig verdünnt in Ethylenglykolmonomethylether) für die Trimerisierung hinzu und ließ bei 65 °C reagieren. Bei einem NCO-Wert von 44,7 % Gew% des Reaktionsgemischs wurde die Reaktion durch Zugabe von einem dreifachen Überschuß von 2-Hydroxyethylcarbamat-Lösung (20 %ige Lösung in Ethylenglykol monomethylether) abgebrochen. Das überschüssige, monomere Isocyanat wurde durch Vakuumdestillation entfernt.

Dabei wurde ein Polyisocyanatgemisch mit folgenden analytischen Daten erhalten:

| | |
|---|---|
| Farbzahl nach Destillation: | 19 Hz |
| NCO-Gehalt nach Destillation: | 21,8 % |
| Viskosität nach Destillation: | 1350 mPa*s |

### Beispiel 6:

1,6-Hexamethylendiisocyanat aus einem Phosgenprozess wurde in Gegenwart von 0,5 Gew% 2-Ethylhexanol bei einer Temperatur von 90 °C gerührt. Anschließend setzte man 95 Gew.ppm (2-Hydroxypropyl)-N,N,N-trimethylammonium-2-ethylhexanoat (DA-BCO® TMR1) als Katalysator (7,5%ig verdünnt in Ethylenglykolmonomethylether) für die Trimerisierung hinzu und ließ bei 65 °C reagieren. Bei einem NCO-Wert von 45,0 % Gew% des Reaktionsgemischs wurde die Reaktion durch Zugabe von einem dreifachen Überschuß an 2-Hydroxyethylcarbamat (20 %ige Lösung in Ethylenglykol monomethylether) abgebrochen. Das überschüssige, monomere Isocyanat wurde durch Vakuumdestillation entfernt.

Dabei wurde ein Polyisocyanatgemisch mit folgenden analytischen Daten erhalten:

| | |
|---|---|
| Farbzahl nach Destillation: | 19 Hz |
| NCO-Gehalt nach Destillation: | 21,7 % |
| Viskosität nach Destillation: | 1100 mPa*s |

### Anwendungstechnische Untersuchungen:

In den anwendungstechnischen Beispeilen wurden folgende Verbindungen eingesetzt:

### Katalysatoren W

| | |
|---|---|
| Katalysator W: | Dibutylzinndilaurat (DBTL, DBTDL) |

### Phenole X

Phenol X: Benzolpropionsäure, 3,5-bis(1,1-dimethyl-ethyl)-4-hydroxy-C7-C9 verzweigtem Alkylester (Irganox® 1135 der Ciba Spezialitätenchemie)

### Sekundäres Antioxidanz (Y)

| | |
|---|---|
| Phosphonit Y-1: | Tetrakis-(2,4-di-tert.-butylphenyl)-4,4'-diphenylen-diphosphonit C (Irgafos® P-EPQ der Ciba Spezialitätenchemie) (aufgereinigt per Ausschütteln in Hexan gegen Wasser und anschließender Trocknung über Magnesiumsulfat) |
| Thioether Y-2: | 3,3'-Thiodipropionsäure-ditridecylester |
| Phosphonat Y-3: | Diphenylphosphonat (C₆H₅O)₂P(=O)H |
| Phosphonat Y-4: | Di-n-butylphosphonat (C₄H₉O)₂P(=O)H |
| Phosphonat Y-5: | Dibenzylphosphonat (C₆H₅CH₂O)₂P(=O)H |
| Phosphit Y-6: | Tributylphosphit |
| Phosphit Y-7: | Tripenylphosphit |

### Lösungsmittel Z

| | |
|---|---|
| Lösungsmittel Z-1: | Solvent Naphtha (Siedebereich ca. 170-180 °C) |
| Lösungsmittel Z-2: | n-Butylacetat |

Die Polyisocyanate wurden in ca. 50 Gew.-% mit den in den nachfolgenden Versuchen angegebenen Konzentrationen vom Katalysator (W) Dibutylzinndilaurat (DBTL), Phenolen (X), und sekundärem Antioxidans (Y) jeweils 10 Gew.%-ig in Butylacetat, und ca. 50 Gew.-% Lösungsmittel (Z) in fest verschlossenen Schraubdeckgefäßen zum Ausschluss von Luft unter Stickstoff gelagert. Spuren von Luft sind nicht ausgeschlossen.

Die Gew.-%-Angaben beziehen sich auf 100 % Gesamtgewicht. Die Konzentrationen der Verbindungen (W), (X), (Y) in ppm beziehen sich im jeweils unverdünnten Zustand der Verbindungen (W) bis (Y) auf die Gesamtmenge Polyisocyanat.

Die Lagerung erfolgt jeweils bei 50 °C im Umluftofen. Die Farbzahlen werden direkt (unmittelbar vor Beginn der Lagerung) und nach Lagerung über unterschiedliche Zeiträume gemessen.

Die Farbzahlmessung in dieser Schrift erfolgt wenn nicht anders angegeben in APHA nach DIN EN 1557 auf einem Lico 300-Gerät der Firma Lange in einer 5 cm Messkuvette mit einem Volumen von 5 mL. Die Fehlertoleranzen betragen für den Sollwert 20 Hz (+/- 5, Ist-Wert 18 Hz); Sollwert 102 Hz (+/- 10, Ist-Wert 99 Hz); Sollwert 202 Hz (+/- 20, Ist-Wert 197 Hz).

Jede Messung wurde unmittelbar gegen ein Muster verglichen, das stabilisatorfrei war.

**Tabelle 1: Versuche mit Polyisocyanat aus Beispiel 1, 1000 ppm Katalysator DBTL (W) und weiteren Komponenten gemäß nachfolgender Tabelle bei 50 °C**

| **Lösungsmittel** | **Phenol** | **Sekundäres Antioxidanz** | | **Farbzahl** | **Farbzahl** | **Farbzahl** |
|---|---|---|---|---|---|---|
| ca 50% | **X** | | **Menge** | **direkt** | **7 Tage** | **70 Tage** |
| | **ppm** | | **ppm** | **Hz** | **Hz** | **Hz** |
| Z-1 | 0 | | 0 | 13 | 67 | 141 |
| Z-1 | 300 | | 0 | 14 | 33 | 86 |
| Z-1 | 200 | **Y-1** | 600 | 16 | 23 | 44 |
| Z-1 | 200 | Y-6 | 600 | 14 | 21 | 40 |
| Z-1 | 200 | Y-7 | 600 | 13 | 21 | 53 |
| Z-2 | 0 | | 0 | 10 | 29 | 53 |
| Z-2 | 300 | | 0 | 11 | 14 | 47 |
| Z-2 | 200 | **Y-1** | 600 | 13 | 14 | 15 |
| Z-2 | 200 | Y-6 | 600 | 12 | 12 | 13 |
| Z-2 | 200 | Y-7 | 600 | 10 | 12 | 14 |

Die Versuchergebnisse zeigen, dass die antioxidative Stabilisierung durch die Verbindung X in Kombination Y-1, Y-6 und Y-7 signifikant ist.

**Tabelle 2: Versuche mit 45 % Polyisocyanat aus Beispiel 2, 2,5 % Butylacetat (Z-2), 52,5 % Lösungsmittel Solvent Naphtha (Z-1) mit 1000 ppm Katalysator DBTL (W) und weiteren Komponenten gemäß nachfolgender Tabelle bei 50 °C.**

| **Phenol** | **Thioether** | **Farbzahl** | **Farbzahl** | **Farbzahl** | **Farbzahl** |
|---|---|---|---|---|---|
| **X** | **Y-2** | **direkt** | **7 Tage** | **28 Tage** | **70 Tage** |
| **Ppm** | **ppm** | **Hazen** | **Hazen** | **Hazen** | **Hazen** |
| 0 | 0 | 17 | 93 | 123 | 389 |
| 200 | 600 | 18 | 35 | 43 | 113 |

Die Versuchergebnisse zeigen, dass die antioxidative Stabilisierung durch die Verbindung X und Y-2 signifikant ist.

**Tabelle 3: Versuche mit 45 % Polyisocyanat analog Beispiel 1 mit Farbzahl 23 Hz; NCO-Gehalt 21,4 % und Viskosität 3250 mPa*s, 2,5 % Butylacetat (Z-2) und 52,5 % in Solvent Naphta (Z-1); mit 1000 ppm Katalysator DBTL (W) und weiteren Komponenten gemäß nachfolgender Tabelle bei 50 °C**

| **Phenol** | **Phosphonat** | **Phosphonat** | **Farbzahl** | **Farbzahl** | **Farbzahl** |
|---|---|---|---|---|---|
| **X** | | | **direkt** | **7 Tage** | **70 Tagen** |
| **ppm** | | **ppm** | **Hz** | **Hz** | **Hz** |
| 0 | | 0 | 12 | 90 | 158 |
| 200 | Y-3 | 600 | 11 | 31 | 61 |
| 200 | Y-4 | 600 | 12 | 32 | 53 |
| 200 | Y-5 | 600 | 12 | 38 | 67 |

Die Versuchergebnisse zeigen, dass die antioxidative Stabilisierung durch die Verbindung Y-3, Y-4 und Y-5 und X signifikant ist.

## Patentansprüche

1. Verfahren zur Herstellung von isocyanuratgruppenhaltigen Polyisocyanatgemischen von (cyclo)aliphatischen Diisocyanaten, umfassend die Reaktionsschritte
a) Umsetzen von monomerem (cyclo)aliphatischem Diisocyanat (D) mit mindestens einem mono- oder difunktionellen 3 bis 10 Kohlenstoffatome aufweisenden Alkohol (A) unter Ausbildung von Urethangruppen in Abwesenheit von diese Reaktion katalysierenden Verbindungen,
b) Umsetzen des aus a) erhaltenen Reaktionsgemischs in Gegenwart mindestens eines Katalysators (K), der die Umsetzung von Isocyanaten zu Isocyanuratgruppen zu katalysieren vermag,
c) Desaktivieren des Katalysators (K) aus Schritt b) durch Zugabe eines Katalysatorgiftes (S),
d) Abtrennen des unumgesetzten (cyclo)aliphatischen Diisocyanats (D) aus dem so erhaltenen Reaktionsgemisch aus c), sowie
wobei es ich bei dem Katalysatorgift (S) um eine Verbindung der Formel 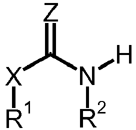 handelt,
worin
R¹ und R² unabhängig voneinander Wasserstoff oder C₁ - C₂₀-Alkyl, C₆ - C₁₂-Aryl oder C₅ - C₁₂-Cycloalkyl, die gegebenenfalls durch Aryl, Alkyl, Aryloxy, Alkyloxy, Heteroatome und/oder Heterocyclen substituiert sein können,
wobei für X=O oder S gilt, daß R¹ ≠ H ist, und
wobei R¹ und R² auch gemeinsam mit der Gruppe X-(CO)-NH einen 5 bis 12-gliedrigen Ring bilden können, wobei R¹ und R² gemeinsam einen gegebenenfalls substituierten zweiwertigen C₂ bis C₉-Alkylenrest bilden, der auch Bestandteil eines Arylen- oder Cycloalkylenrestes sein kann,
Z Sauerstoff (O) oder Schwefel (S), bevorzugt Sauerstoff X Sauerstoff (O), Schwefel (S), Imino (NH) oder substituiertes Imino (NR³) und R³ C₁ bis C₄-Alkyl
bedeuten,
wobei der Rest R¹ der Verbindungen (S) mindestens eine, bevorzugt genau eine gegenüber Isocyanat reaktive Gruppe aufweist.

2. Verfahren gemäß Anspruch 1, **dadurch gekennzeichnet, dass** der Reaktionsschritt d) durch Dünnschichtdestillation erfolgt und als zusätzlicher Reaktionsschritt e) eine Ozonolyse des aus d) erhaltenen Destillationssumpfes erfolgt.

3. Verfahren gemäß Anspruch 1 oder 2, **dadurch gekennzeichnet, daß** es sich bei dem Katalysator (K) um ein quartäres Ammoniumsalz der Formel 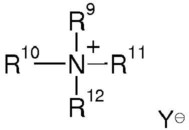 handelt, mit
Y^{⊖}= R¹³COO⁻,
worin
R¹³ Wasserstoff, C₁ bis C₂₀-Alkyl, C₆ bis C₁₂-Aryl oder C₇ bis C₂₀-Arylalkyl, das jeweils optional substituiert sein kann und
R⁹ bis R¹² gleiche oder unterschiedliche Alkylgruppen mit 1 bis 20 Kohlenstoffatomen darstellen, die gegebenenfalls durch Hydroxyl- oder Phenylgruppen substituiert sind.

4. Verfahren nach einem der vorstehenden Ansprüche, **dadurch gekennzeichnet, daß** der Alkohol (A) ausgewählt ist aus der Gruppe bestehend aus monofunktionellen Alkanolen und difunktionellen Alkandiolen.

5. Verfahren gemäß Anspruch 3, **dadurch gekennzeichnet, daß** das Alkanol ausgewählt ist aus der Gruppe bestehend aus n-Butanol, iso-Butanol, n-Hexanol, n-Octanol, Ethylenglycol monomethylether und 2-Ethylhexanol.

6. Verfahren gemäß Anspruch 3, **dadurch gekennzeichnet, daß** das Alkandiol ausgewählt ist aus der Gruppe bestehend aus 1,2-Propandiol, Ethylenglykol, 2,2-Dimethyl-1,2-Ethandiol, 1,3-Propandiol, 1,2-Butandiol, 1,2-Butandiol, 1,4-Butandiol, 1,5-Pentandiol, 1,6-Hexandiol, 2-Methyl-1,3-pentandiol, 2-Ethyl-1,3-hexandiol, 2,2,4-Trimethyl-1,3-pentandiol, 2-Propyl-1,3-heptandiol, 1,8-Octandiol und 1,10-Decandiol.

7. Verfahren nach einem der vorstehenden Ansprüche, **dadurch gekennzeichnet, daß** das Diisocyanat (D) ausgewählt ist aus der Gruppe bestehend aus 1,6-Hexamethylendiisocyanat und Isophorondiisocyanat.

8. Verfahren nach einem der vorstehenden Ansprüche, **dadurch gekennzeichnet, daß** die Verbindung (S) ausgewählt ist aus der Gruppe bestehend aus O-2-Hydroxyethylcarbamat, O-3-Hydroxypropylcarbamat und O-2-Hydroxypropylcarbamat oder deren Gemische.

9. Gemisch aus einem Polyisocyanat erhalten gemäß einem der vorstehenden Ansprüche und mindestens einem Stabilisator ausgewählt aus der Gruppe bestehend aus Phosphiten, Phosphonaten, Phosphoniten, Thioverbindungen und sterisch gehinderten Phenolen.

10. Gemisch gemäß Anspruch 9, zusätzlich enthaltend mindestens eine Lewissaure organische Metallverbindung.

11. Verwendung von Polyisocyanaten erhalten nach einem Verfahren der Ansprüche 1 bis 8 zur Herstellung von Polyurethanen und Polyurethanlacken.

12. Verwendung von Polyisocyanaten erhalten nach einem Verfahren der Ansprüche 1 bis 8 in Beschichtungsmitteln zur Beschichtung von Holz, Holzfurnier, Papier, Pappe, Karton, Textil, Leder, Vlies, Kunststoffoberflächen, Glas, Keramik, mineralischen Baustoffen, Metallen oder beschichteten Metallen.

13. Verwendung von Polyisocyanaten erhalten nach einem Verfahren der Ansprüche 1 bis 8 in Beschichtungsmitteln in Grundierungen, Füllern, pigmentierten Decklacken, Basislacken und Klarlacken im Bereich Autoreparatur- oder Großfahrzeuglackierung sowie bei Nutzfahrzeugen im landwirtschaftlichen und Baubereich.

14. Polyurethanlack, enthaltend mindestens ein Polyisocyanat erhalten nach einem Verfahren der Ansprüche 1 bis 8 und mindestens ein Polyol als Bindemittel.

15. Polyurethanlack, enthaltend mindestens ein Gemisch gemäß einem der Ansprüche 9 oder 10 und mindestens ein Polyol als Bindemittel.

## Claims

1. A process for preparing isocyanurate group-comprising polyisocyanate mixtures of (cyclo)aliphatic diisocyanates, which comprises the reaction steps
a) reaction of monomeric (cyclo)aliphatic diisocyanate (D) with at least one monofunctional or bifunctional alcohol (A) having from 3 to 10 carbon atoms to form urethane groups in the absence of compounds which catalyze this reaction,
b) reaction of the reaction mixture obtained from a) in the presence of at least one catalyst (K) which is able to catalyze the reaction of isocyanates to form isocyanurate groups,
c) deactivation of the catalyst (K) from step b) by addition of a catalyst poison (S),
d) separation of the unreacted (cyclo)aliphatic diisocyanate (D) from the reaction mixture obtained in this way from c) and
wherein the catalyst poison (S) is a compound of the formula 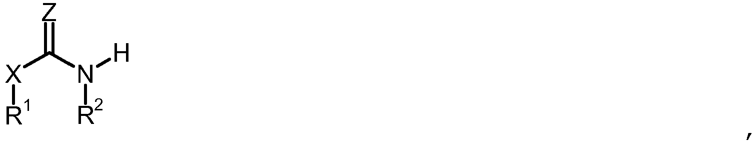 where
R¹ and R² are each, independently of one another, hydrogen or C₁ - C₂₀-alkyl, C₆ - C₁₂-aryl or C₅ - C₁₂-cycloalkyl which may each optionally be substituted by aryl, alkyl, aryloxy, alkyloxy, heteroatoms and/or heterocycles,
where when X=O or S, R¹ ≠ H and
R¹ and R² together with the group X-(CO)-NH can also form a 5 to 12-membered ring, with R¹ and R² together forming an optionally substituted divalent C₂-C₉-alkylene radical which can also be part of an arylene or cycloalkylene radical,
Z is oxygen (O) or sulfur (S), preferably oxygen,
X is oxygen (O), sulfur (S), imino (NH) or substituted imino (NR³) and
R³ is C₁ - C₄-alkyl,
where the radical R¹ of the compounds (S) has at least one, preferably precisely one, group which is reactive toward isocyanate.

2. The process according to claim 1, wherein the reaction step d) is carried out by thin film distillation and ozonolysis of the distillation bottoms obtained from d) is carried out as additional reaction step e).

3. The process according to claim 1 or 2, wherein the catalyst (K) is a quaternary ammonium salt of the formula 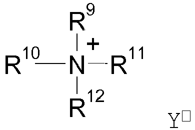 where
Y^{□}= R¹³COO⁻,
where
R¹³ is hydrogen, C₁ - C₂₀-alkyl, C₆ - C₁₂-aryl or C₇ - C₂₀-arylalkyl, each of which may optionally be substituted, and
R⁹ to R¹² are identical or different alkyl groups which have from 1 to 20 carbon atoms and are optionally substituted by hydroxy or phenyl groups.

4. The process according to any of the preceding claims, wherein the alkyl (A) is selected from the group consisting of monofunctional alkanols and bifunctional alkanediols.

5. The process according to claim 3, wherein the alkanol is selected from the group consisting of n-butanol, isobutanol, n-hexanol, n-octanol, ethylene glycol monomethyl ether and 2-ethylhexanol.

6. The process according to claim 3, wherein the alkanediol is selected from the group consisting of 1,2-propanediol, ethylene glycol, 2,2-dimethyl-1,2-ethanediol, 1,3-propanediol, 1,2-butanediol, 1,2-butanediol, 1,4-butanediol, 1,5-pentanediol, 1,6-hexanediol, 2-methyl-1,3-pentanediol, 2-ethyl-1,3-hexanediol, 2,2,4-trimethyl-1,3-pentanediol, 2-propyl-1,3-heptanediol, 1,8-octanediol and 1,10-decanediol.

7. The process according to any of the preceding claims, wherein the diisocyanate (D) is selected from the group consisting of hexamethylene 1,6-diisocyanate and isophorone diisocyanate.

8. The process according to any of the preceding claims, wherein the compound (S) is selected from the group consisting of O-2-hydroxyethyl carbamate, O-3-hydroxypropyl carbamate and O-2-hydroxypropyl carbamate and mixtures thereof.

9. A mixture of a polyisocyanate obtained according to any of the preceding claims and at least one stabilizer selected from the group consisting of phosphites, phosphonates, phosphonites, thio compounds and sterically hindered phenols.

10. The mixture according to claim 9 which additionally comprises at least one Lewis-acid organic metal compound.

11. The use of polyisocyanates obtained by a process according to any of claims 1 to 8 for producing polyurethanes and polyurethane surface coatings.

12. The use of polyisocyanates obtained by a process according to any of claims 1 to 8 in coating compositions for coating wood, wood veneer, paper, paperboard, cardboard, textile, leather, nonwoven, plastic surfaces, glass, ceramic, mineral building materials, metals or coated metals.

13. The use of polyisocyanates obtained by a process according to any of claims 1 to 8 in coating compositions in primers, fillers, pigmented topcoats, undercoats and clear coatings in the field of surface coating for automobile repair or large vehicles and also for working vehicles in agriculture and the building sector.

14. A polyurethane surface coating composition comprising at least one polyisocyanate obtained by a process according to any of claims 1 to 8 and at least one polyol as binder.

15. A polyurethane surface coating composition comprising at least one mixture according to either claim 9 or 10 and at least one polyol as binder.

## Revendications

1. Procédé pour la préparation de mélanges de polyisocyanates, contenant des groupes isocyanurate, de diisocyanates (cyclo)aliphatiques comprenant les étapes de réaction
a) transformation de diisocyanate (cyclo)aliphatique monomère (D) avec au moins un alcool (A) monofonctionnel ou difonctionnel présentant 3 à 10 atomes de carbone avec formation de groupes uréthane en l'absence de composés catalysant cette réaction,
b) transformation du mélange réactionnel obtenu dans a) en présence d'au moins un catalyseur (K) qui est apte à la catalyse de la transformation d'isocyanates en groupe isocyanurate,
c) désactivation du catalyseur (K) de l'étape b) par addition d'un poison de catalyseur (S),
d) séparation du diisocyanate (cyclo)aliphatique non transformé (D) du mélange réactionnel ainsi obtenu de c),
en ce qu'il s'agit, pour le poison de catalyseur (S), d'un composé de formule 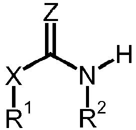 dans laquelle
R¹ et R² signifient, indépendamment l'un de l'autre, hydrogène ou C₁-C₂₀-alkyle, C₆-C₁₂-aryle ou C₅-C₁₂-cycloalkyle, qui peuvent le cas échéant être substitués par aryle, alkyle, aryloxy, alkyloxy, des hétéroatomes et/ou des hétérocycles, où, pour X = O ou S, R¹ ≠ H, et
R¹ et R² peuvent également former, ensemble avec le groupe X-(CO)-NH, un cycle de 5 à 12 chaînons, R¹ et R² formant ensemble un radical C₂-C₉-alkylène bivalent, le cas échéant substitué, qui peut également faire partie d'un radical arylène ou cycloalkylène,
Z signifie oxygène (O) ou soufre (S), de préférence oxygène,
X signifie oxygène (O), soufre (S), imino (NH) ou imino substitué (NR³) et R³ signifie C₁-C₄-alkyle,
le radical R¹ des composés (S) présentant au moins un, de préférence exactement un, groupe réactif par rapport à isocyanate.

2. Procédé selon la revendication 1, **caractérisé en ce que** l'étape de réaction d) est effectuée par une distillation en couche mince et qu'une ozonolyse du fond de distillation obtenu de d) a lieu comme étape de réaction e) supplémentaire.

3. Procédé selon la revendication 1 ou 2, **caractérisé en ce qu'**il s'agit, pour le catalyseur (K) d'un sel d'ammonium quaternaire de formule 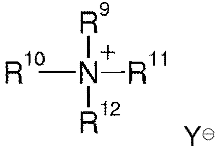 où
Y⁻ = R¹³COO-,
où
R¹³ hydrogène, C₁-C₂₀-alkyle, C₆-C₁₂-aryle ou C₇-C₂₀-arylalkyle, qui peut à chaque fois éventuellement être substitué et
R⁹ à R¹² représentent des groupes alkyle identiques ou différents comprenant 1 à 20 atomes de carbone, qui sont le cas échéant substitués par des groupes hydroxyle ou phényle.

4. Procédé selon l'une quelconque des revendications précédentes, **caractérisé en ce que** l'alcool (A) est choisi dans le groupe constitué par les alcanols monofonctionnels et les alcanediols difonctionnels.

5. Procédé selon la revendication 3, **caractérisé en ce que** l'alcanol est choisi dans le groupe constitué par le n-butanol, l'iso-butanol, le n-hexanol, le n-octanol, l'éthylèneglycolmonométhyléther et le 2-éthylhexanol.

6. Procédé selon la revendication 3, **caractérisé en ce que** l'alcanediol est choisi dans le groupe constitué par le 1,2-propanediol, l'éthylèneglycol, le 2,2-diméthyl-1,2-éthanediol, le 1,3-propanediol, le 1,2-butanediol, le 1,2-butanediol, le 1,4-butanediol, le 1,5-pentanediol, le 1,6-hexanediol, le 2-méthyl-1,3-pentanediol, le 2-éthyl-1,3-hexanediol, le 2,2,4-triméthyl-1,3-pentanediol, le 2-propyl-1,3-heptanediol, le 1,8-octanediol et le 1,10-décanediol.

7. Procédé selon l'une quelconque des revendications précédentes, **caractérisé en ce que** le diisocyanate (D) est choisi dans le groupe constitué par le diisocyanate de 1,6-hexaméthylène et le diisocyanate d'isophorone.

8. Procédé selon l'une quelconque des revendications précédentes, **caractérisé en ce que** le composé (S) est choisi dans le groupe constitué par l'O-2-hydroxyéthylcarbamate, l'O-3-hydroxypropylcarbamate et l'O-2-hydroxypropylcarbamate ou leurs mélanges.

9. Mélange d'un polyisocyanate obtenu selon l'une quelconque des revendications précédentes et d'au moins un stabilisant choisi dans le groupe constitué par les phosphites, les phosphonates, les phosphonites, les composés thio et les phénols stériquement encombrés.

10. Mélange selon la revendication 9, contenant en outre au moins un composé métallique organique acide de Lewis.

11. Utilisation de polyisocyanates obtenus selon un procédé des revendications 1 à 8 pour la préparation de polyuréthanes et de laques à base de polyuréthane.

12. Utilisation de polyisocyanates obtenus selon un procédé des revendications 1 à 8 dans des agents de revêtement, pour le revêtement de bois, de placage en bois, de papier, de carton-pâte, de carton, de textile, de cuir, de non-tissé, de surfaces en matériau synthétique, de verre, de céramique, de matériaux de construction minéraux, de métaux ou de métaux revêtus.

13. Utilisation des polyisocyanates obtenus selon un procédé des revendications 1 à 8 dans des agents de revêtement, dans des apprêts, des charges, des laques de recouvrement pigmentées, des laques de base et des laques claires dans le domaine du laquage de réparation de voitures ou de véhicules de grande taille ainsi que pour des véhicules utilitaires dans le domaine agricole et de la construction.

14. Laque à base de polyuréthane, contenant au moins un polyisocyanate obtenu selon un procédé des revendications 1 à 8 et au moins un polyol comme liant.

15. Laque à base de polyuréthane, contenant au moins un mélange selon l'une quelconque des revendications 9 ou 10 et au moins un polyol comme liant.
